# EUROPEAN PATENT SPECIFICATION

(11) **EP 4 261 098 B1**
(45) Date of publication and mention of the grant of the patent: **30.09.2026**
(21) Application number: 20964864.1
(22) Date of filing: 21.12.2020
(51) Int. Cl.: B61F 3/14, B61F 5/50

(54) **BOGIE SYSTEM FOR RAIL VEHICLE AND RAIL VEHICLE**
DREHGESTELLSYSTEM FÜR SCHIENENFAHRZEUG UND SCHIENENFAHRZEUG
SYSTÈME DE BOGIE POUR VÉHICULE FERROVIAIRE ET VÉHICULE FERROVIAIRE

(30) Priority: 09.12.2020 CN 202011426780
(43) Date of publication of application: 18.10.2023
(73) Proprietor: CRRC TANGSHAN CO., LTD., Fengrun District Tangshan Hebei 063035 (CN)
(72) Inventor: CHEN, Yanhong, Tangshan Hebei 063035 (CN); QIN, Chengwei, Tangshan Hebei 063035 (CN); CHU, Bogang, Tangshan Hebei 063035 (CN); ZHANG, Wenzhao, Tangshan Hebei 063035 (CN); LU, Na, Tangshan Hebei 063035 (CN); LV, Shaopeng, Tangshan Hebei 063035 (CN)
(74) Representative: dompatent
(86) International application number: PCT/CN2020/137967
(87) International publication number: WO 2022/120932

(56) References cited:
- CN-A- 102 923 151
- CN-A- 103 249 628
- CN-A- 112 519 821
- CN-A- 112 550 340
- CN-U- 202 863 462
- CN-U- 207 311 470
- CN-U- 211 166 873
- DE-A1- 2 542 780
- DE-A1- 2 542 780
- DE-A1- 2 558 676
- DE-C- 726 181
- GB-A- 2 561 873
- US-A- 2 098 517

## Description

### TECHNICAL FIELD

The present disclosure relates to railway vehicles, in particular to a railway vehicle and a bogie frame system thereof.

### BACKGROUND

The conventional bogie frame has high noise and large interference to the outside. Aerodynamic drag is one of the key performances affecting the speed increase of highspeed trains, and good drag characteristics are also an important symbol of energy saving and environmental protection of trains. The main sources of aerodynamic drag of highspeed trains include surface friction, differential pressure resistance between head and tail cars, bogie frames, pantograph system, clearance between cars, and so on. The aerodynamic drag of the bogie frames area and equipment under the train can be 22% to 53% of the total aerodynamic drag of the train. Therefore, reducing the aerodynamic drag at the bottom of the train is an important issue in the aerodynamic drag reduction of highspeed trains.

Therefore, the high noise and large aerodynamic drag of bogie frames are urgent technical problems to be solved by one skilled in the art.

DE 2542780A1 discloses a bogie for vehicles, with laterally and at the head end of the bogie attached, sound-absorbing cladding elements.

GB 2561873A discloses a railway vehicle comprising: a railway car body to accommodate passengers; an undercarriage which is an assembly of components attached to a bottom of the railway car body; a railway bogie which is situated below the railway car body, wherein the railway bogie comprises: a bogie frame formed with two side beams spaced apart and parallel to each other and a cross beam connecting the center portions of the side beams; an axle box rotatably holding a wheelset consisting of wheels and an axle; an axle spring disposed between the side beam and the axle box; a secondary suspension bag disposed on the center portion of the side beam; a yaw damper attached to a side face of the side beam; a multipart bogie side cover which is disposed along the side beam and is positioned on the opposite sides of the cross beam with respect to its mid-plane, wherein the multipart bogie side cover comprises: an extremity part which covers the axle spring, the axle box and an end portion of the side beam; a central part which covers the yaw damper and the secondary suspension bag.

US 2098517A discloses a railway vehicle truck, center bearing elements, a top cover having an aperture for said center bearing elements, and a hollow housing projecting upwardly from said cover around said aperture, said cover and housing being shaped to reduce air resistance of the upper parts of said truck and said center bearing elements.

The above information disclosed in the background is only for the enhancement of understanding of the background of the present disclosure and therefore may contain information that does not form the prior art known to one skilled in the art.

### SUMMARY

The embodiment of the present disclosure provides a railway vehicle and a bogie frame system thereof, so as to solve the technical problems of high noise and large aerodynamic drag of the bogie frame system.

The embodiment of the present disclosure provides a bogie frame system of a railway vehicle according to claim 1.

The railway vehicle of the embodiment of the present disclosure includes the above bogie frame system.

The bogie frame system of the railway vehicle of the embodiment of the present disclosure includes a bogie frame and a bogie frame chamber, wherein the bogie frame chamber includes a chamber body assembly. The chamber body assembly includes a main chamber plate and two side chamber plates fixed with two sides of the main chamber plate. Thus, the main chamber plate and the two side chamber plates form a semi-enclosed structure which forms a recessed cavity for receiving the bogie frame of the railway vehicle. During assembling the bogie frame chamber and the bogie frame, the inner side of the main chamber plate is fixed with the front or rear of the bogie frame to separate the front or rear of the bogie frame from the outside, and the inner sides of the two side chamber plates are fixed with the side of the bogie frame to separate the side of the bogie frame from the outside. In this way, the chamber body assembly is connected to the bogie frame and covered the front or rear and the side of the bogie frame. The bogie frame chamber blocks the noise inside the bogie frame chamber from transmitting outward, which has the effect of reducing the far-field noise of the train. Moreover, guiding the airflow flowing along the outer surface of the bogie frame chamber, reduces the airflow entering the bogie frame chamber and reduces the air resistance in the bogie frame area, thus improving the aerodynamic performance.

### BRIEF DESCRIPTION OF THE DRAWINGS

Fig. 1 is a schematic view of a bogie frame system of a railway vehicle according to an embodiment of the present disclosure.
Fig. 2 is a schematic view of a bogie frame chamber of the bogie frame system shown in Fig. 1.
Fig. 3 is an exploded schematic view of the main chamber plate and the side chamber plate of the bogie frame chamber shown in Fig. 2.
Fig. 4 is an exploded view of the connecting structure of the main chamber plate and the side chamber plate shown in Fig. 3.
Fig. 5 is an assembly view of the connecting structure of the main chamber plate and the side chamber plate shown in Fig. 4.
Fig. 6 is a schematic view of the first anti-rotation seat of the bogie frame chamber shown in Fig. 3.
Fig. 7 is a partially enlarged view of the bogie frame chamber shown in Fig. 2.
Fig. 8 is a partially enlarged view of the bogie frame chamber shown in Fig. 7.
Fig. 9 is an exploded schematic view of the side chamber plate and the first connecting frame of the bogie frame chamber shown in Fig. 2.
Fig. 10 is an exploded view of the connecting structure of the side chamber plate, the first connecting frame, and the second connecting frame shown in Fig. 8.
Fig. 11 is an exploded schematic view of the connection between the side chamber connecting rod of the first connecting frame and the primary spring fixing seat of the bogie frame.
Fig. 12 is an exploded schematic view of the connection between the brake hanging bracket connecting rod of the second connecting frame and the brake unit hanging bracket of the bogie frame.
Fig. 13 is an exploded schematic view of the connection between the crossbeam connecting rod of the second connecting frame and the crossbeam of the bogie frame.
Fig. 14 is a perspective view of the first connecting frame of the bogie frame chamber shown in Fig. 2.
Fig. 15 is a perspective view of the second connecting frame of the bogie frame chamber shown in Fig. 2.
Fig. 16 is a perspective view of a crossbeam provided by the embodiment of the present disclosure.
Fig. 17 is a perspective view of a crossbeam single-structure provided by the embodiment of the present disclosure.
Fig. 18 is a sectional view of the crossbeam provided by the embodiment of the present disclosure.
Fig. 19 is a partial enlarged view of area A in Fig. 18.
Fig. 20 is an exploded view of two crossbeam single-structures connected according to the embodiment of the present disclosure.
Fig. 21 is a perspective view of a sidebeam provided by the embodiment of the present disclosure.
Fig. 22 is a front view of the sidebeam provided by the embodiment of the present disclosure.
Fig. 23 is another front view of the sidebeam provided by the embodiment of the present disclosure.
Fig. 24 is a schematic view of the sidebeam provided in the embodiment bearing a first vertical load.
Fig. 25 is a schematic view of the sidebeam provided in the embodiment bearing a second vertical load.
Fig. 26 is a structural schematic view of the crossbeam, the sidebeam, and the secondary suspension mounting seat of the bogie frame provided by the embodiment of the present disclosure.
Fig. 27 is an exploded view of the crossbeam, the sidebeam, and the secondary suspension mounting seat of the bogie frame provided by the embodiment of the present disclosure.
Fig. 28 is a top perspective view of the secondary suspension mounting seat provided by the embodiment of the present disclosure.
Fig. 29 is a bottom perspective view of the secondary suspension mounting seat provided by the embodiment of the present disclosure.
Fig. 30 is a partial sectional view of the assembly of the secondary suspension mounting seat, the sidebeam, and the crossbeam provided by the embodiment of the present disclosure.
Fig. 31 is a structural schematic view of the bogie frame provided by the embodiment of the present disclosure in which a secondary suspension device is disposed.
Fig. 32 is a structural schematic view of the secondary suspension mounting seat provided by the embodiment of the present disclosure, which is connected to the traction motor through the motor balancing link.
Fig. 33 is a structural schematic view of the bogie frame provided by the embodiment of the present disclosure.
Fig. 34 is a structural schematic view of a wheelset of the bogie frame provided by the embodiment of the present disclosure.
Fig. 35 is a partial schematic view of the bogie frame provided by the embodiment of the present disclosure with a safety stopper device.
Fig. 36 is a sectional view of the bogie frame provided by the embodiment of the present disclosure with the safety stopper device.
Fig. 37 is a structural schematic view of the safety stopper device provided by the embodiment of the present disclosure.
Fig. 38 is an exploded view of the assembly of the safety stopper device, the primary suspension, and the shaft box provided by the embodiment of the present disclosure.
Fig. 39 is a perspective view of a brake hanging bracket of the bogie frame provided by the embodiment of the present disclosure.
Fig. 40 is a schematic view of the connection between the brake hanging bracket and the crossbeam provided by the embodiment of the present disclosure.
Fig. 41 is an exploded view of the connection between the brake hanging bracket and the crossbeam provided by the embodiment of the present disclosure.
Fig. 42 is a sectional view of the connection between the brake hanging bracket and the crossbeam provided by the embodiment of the present disclosure.
Fig. 43 is a perspective schematic view of the connection between the crossbeam and the vertical vibration damper provided by the embodiment of the present disclosure.
Fig. 44 is an enlarged schematic view of area B in Fig. 43.
Fig. 45 is an exploded schematic view of the connection between the crossbeam and the vertical vibration damper provided by the embodiment of the present disclosure.
Fig. 46 is a schematic view of the arranged position of the vertical vibration damper on the bogie frame provided by the embodiment of the present disclosure.
Fig. 47 is a perspective view of a non-powered bogie frame provided by the embodiment of the present disclosure.
Fig. 48 is a perspective view of a powered bogie frame provided by the embodiment of the present disclosure.
Fig. 49 is a perspective view of an anti-roll torsion bar provided by the embodiment of the present disclosure.
Fig. 50 is a structural schematic view of the crossbeam connected to the shaft box by a tension-only rod provided by the embodiment of the present disclosure.

### DETAILED DESCRIPTION OF THE EMBODIMENTS

### Embodiment 1

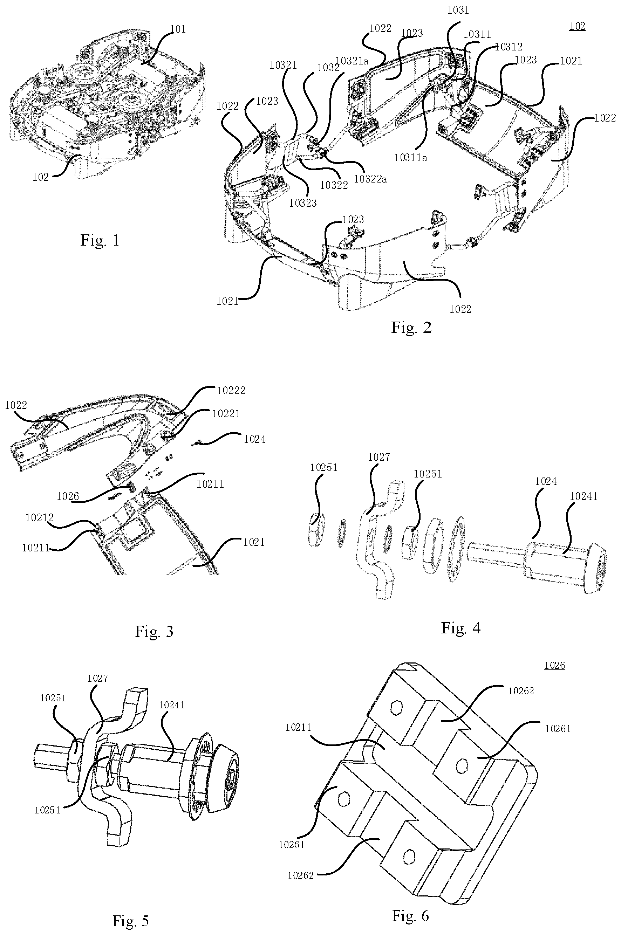

Fig. 1 is a schematic view of a bogie frame system of a railway vehicle according to an embodiment of the present disclosure, and Fig. 2 is a schematic view of a bogie frame chamber of the bogie frame system shown in Fig. 1. As shown in Figs. 1 and 2, the bogie frame system of the railway vehicle according to an embodiment of the present disclosure includes a bogie frame 101 and a bogie frame chamber 102, the bogie frame chamber 102 including a chamber body assembly, the chamber body assembly including:
a main chamber plate 1021 and two side chamber plates 1022. Two side chamber plates 1022 are fixed with two sides of the main chamber plate 1021 and form a recessed cavity with the main chamber plate 1021 for receiving the bogie frame of the railway vehicle. The inner side of the main chamber plate is fixed with the front or rear of the bogie frame, to separate the front or rear of the bogie frame from the outside. The inner sides of the two side chamber plates are fixed with the sides of the bogie frame to separate the sides of the bogie frame from the outside.

The bogie frame system of the railway vehicle of the embodiment of the present disclosure includes a bogie frame and a bogie frame chamber, wherein the bogie frame chamber includes a chamber body assembly. The chamber body assembly includes a main chamber plate and two side chamber plates fixed with two sides of the main chamber plate. Thus, the main chamber plate and the two side chamber plates form a semi-enclosed structure which forms a recessed cavity for receiving the bogie frame of the railway vehicle. During assembling the bogie frame chamber and the bogie frame, the inner side of the main chamber plate is fixed with the front or rear of the bogie frame to separate the front or rear of the bogie frame from the outside, and the inner sides of the two side chamber plates are fixed with the side of the bogie frame to separate the side of the bogie frame from the outside. In this way, the chamber body assembly is connected to the bogie frame and covered the front or rear and the side of the bogie frame. The bogie frame chamber blocks the noise inside the bogie frame chamber from transmitting outward, which has the effect of reducing the far-field noise of the train. Moreover, guiding the airflow flowing along the outer surface of the bogie frame chamber, which reduces the airflow entering the bogie frame chamber and reduces the air resistance in the bogie frame area, thus improving the aerodynamic performance.

In practice, a first preset interval is maintained between the main chamber plate and the bogie frame, and a second preset interval is maintained between the side chamber plate and the bogie frame. In a case where the main chamber plate 1021 is fixed with the bogie frame specifically, the main chamber plate 1021 covers the inner edges of the two sidebeams of the bogie frame in the width direction and components located between the two sidebeams of the bogie frame in the height direction.

The bogie frame as a whole structure has a slightly lower middle and higher sides. The main chamber plate covers the lower middle portion of the bogie frame, that is, the inner edges of the two sidebeams of the bogie frame in the width direction and the components located between the two sidebeams of the bogie frame in the height direction. That is to say, the main chamber plate can cover the front or rear of the bogie frame, which avoids the front or rear of the bogie frame from being exposed to affect the aerodynamic performance. Moreover, the middle portion of the main chamber plate is slightly lower, which further avoids interference with the car body and the energy absorption device of the railway vehicle.

In a case where the side chamber plate 1022 is fixed with the bogie frame specifically, the side chamber plate 1022 covers the sidebeam of the bogie frame, and the side of the bogie frame in the width direction, upwardly covers the upper surface of the sidebeam of the bogie frame in the height direction, and downwardly covers the components mounted on the sidebeam of the bogie frame in the height direction. Two side chamber plates respectively cover the higher portion on two sides of the bogie frame. The side chamber plate can cover the front or rear and the side of the sidebeam of the bogie frame, which avoids the front or rear of the bogie frame being exposed to affect the aerodynamic performance.

The main chamber plate 1021 has a streamlined outer surface and the side chamber plate 1022 has a streamlined outer surface. The outer surface of the main chamber plate 1021 and the outer surface of the side chamber plate 1022 are employed to guide airflow flowing along the outer surface of the bogie frame chamber 102 and to reduce airflow entering into the bogie frame chamber 102. The outer surface of the main chamber plate 1021 and the outer surface of the side chamber plate 1022 are streamlined, which avoids the front or rear of the bogie frame from being exposed to the outside, reduces the exposed area of the side of the bogie frame, reduces the wind resistance, and avoids to affect the aerodynamic performance.

In a case where the side chamber plate 1022 is fixed with the bogie frame specifically, the side of the side chamber plate away from the main chamber plate covers the brake unit of the bogie frame. The braking unit is located at the middle outside of the bogie frame, and the side of the side chamber plate away from the main chamber plate covers the braking unit of the bogie frame, which reduces the exposed area of the side of the bogie frame and has better aerodynamic performance. Moreover, the side chamber plate covers the braking unit and separates the outside world, thus reducing the noise of the bogie frame.

The side chamber plate is further employed to guide the airflow entering the upper and/or lower ends of the main chamber plate to the brake unit of the bogie frame to cool down the brake unit. During the braking unit operating, high heat and noise will be generated. The side chamber plate is designed with the structure to guide the airflow entering the upper and/or lower ends of the main chamber plate to the brake unit of the bogie frame to cool down the brake unit.

The bogie frame chamber further includes a sound-absorbing plate 1023 fixed on the inner of the main chamber plate and/or the inner of the side chamber plate. The main chamber plate is made of lightweight composite material, and the side chamber plate is made of lightweight composite material. The lightweight composites include carbon fiber composites, glass fiber composites, and so on. With the sound-absorbing plate, the noise generated by the bogie frame is absorbed by the sound-absorbing plate, so as to greatly reduce the noise of the bogie frame. The main chamber plate and the side chamber plate are made of lightweight composite material, and the weight of the bogie frame chamber is small.

In order to realize the connection between the bogie frame chamber and the bogie frame, the bogie frame chamber further includes a structure connected to the bogie frame. As shown in Fig. 2, the bogie frame chamber further includes a first connecting frame 1031 including a side chamber plate connecting rod 10311 and a main chamber plate connecting rod 10312. One end of the side chamber plate connecting rod 10311 is connected to the inner side of the side chamber plate 1022 by a rubber joint, and the other end of the side chamber plate connecting rod 10311 is provided with a primary fixing seat interface 10311a. One end of the main chamber plate connecting rod 10312 is connected to the inner side of the main chamber plate 1021 by a rubber joint, and the other end of the main chamber plate connecting rod 10312 is fixed with the side chamber plate connecting rod 10311. The primary fixing seat interface 10311a of the side chamber connecting rod is employed to connect with the primary spring fixing seat of the bogie frame.

With the first connecting frame as a whole structure, one end of the first connecting frame is connected to the first spring fixing seat of the bogie frame by the first fixing seat interface of the side chamber plate connecting rod, the other end of the first connecting frame is connected to the inner side of the side chamber plate by the rubber joint through the side chamber plate connecting rod, and is connected to the inner side of the main chamber plate by the rubber joint through the main chamber plate connecting rod, thereby realizing the connection between the bogie frame, the main chamber plate and the side chamber plate. With the rubber joint, attenuating vibration of the bogie frame chamber during vehicle running.

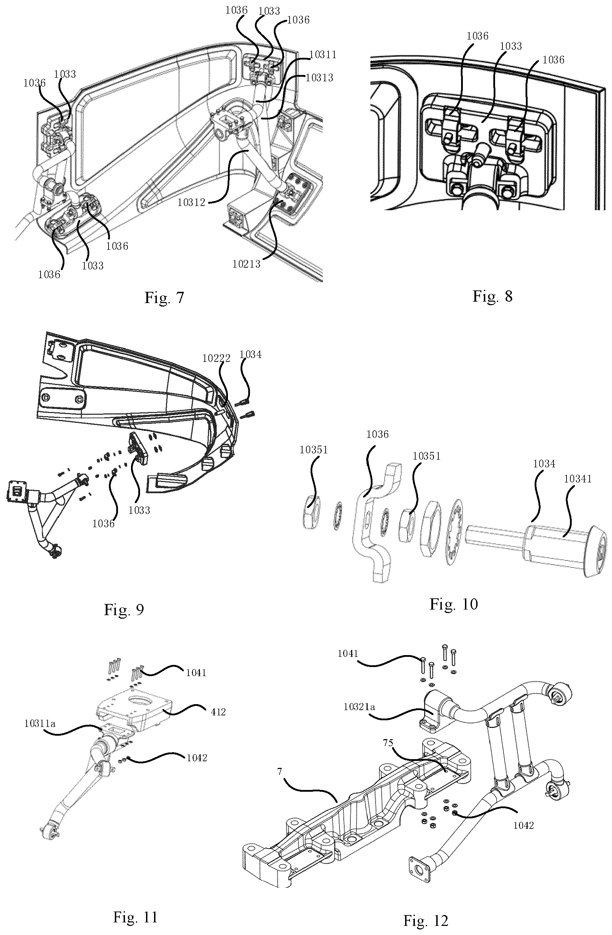

More specifically, Fig. 11 is an exploded schematic view of the connection between the side chamber plate connecting rod of the first connecting frame and the primary spring fixing seat of the bogie frame. As shown in Fig. 11, the primary fixing seat interface 10311a of the side chamber plate connecting rod and the primary spring fixing seat of the bogie frame are fixedly connected by the chamber fixing nuts and the chamber fixing bolts. The side chamber connecting rod 10311 is higher than the main chamber plate connecting rod 10312.

The first connecting frame 1031 further includes a first connecting frame reinforcing rod 10313, one end of which is fixed with the side chamber connecting rod 10311, and the other end of which is fixed with the main chamber plate connecting rod 10312, to reinforce the strength of the first connecting frame 1031. The first connecting frame reinforcing rod makes the strength of the whole first connecting frame higher.

Specifically, the connection position between the main chamber plate connecting rod and the main chamber plate is located in the middle of the main chamber plate in the height direction. The connection position between the side chamber plate connecting rod and the side chamber plate is consistent with the height of the primary spring fixing seat of the bogie frame. The main chamber plate connecting rod and the side chamber plate connecting rod can be designed according to the bogie frame to keep distance from the bogie frame.

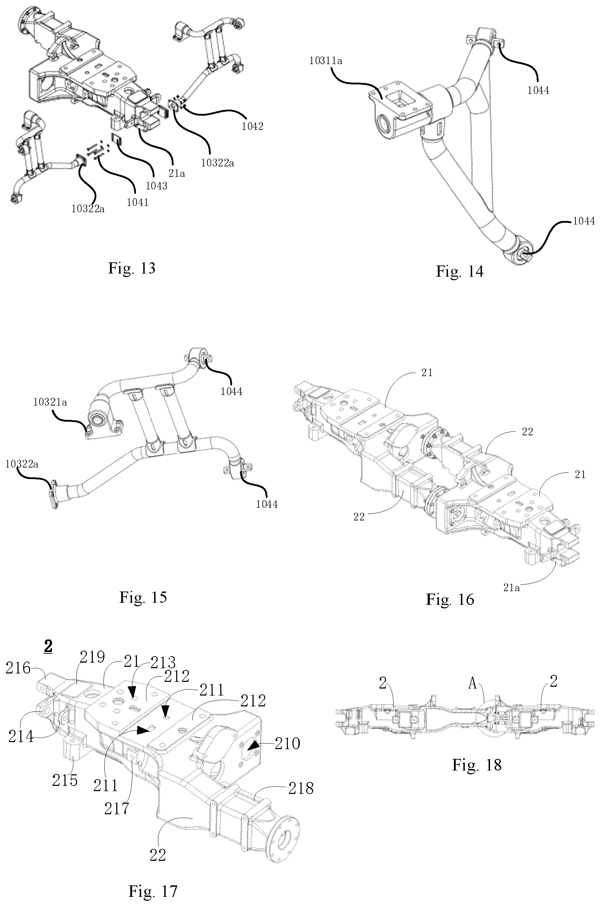

Specifically, Fig. 14 is a perspective view of the first connecting frame of the bogie frame chamber shown in Fig. 2. As shown in Fig. 14, one end of the side chamber plate connecting rod away from the primary mounting seat interface 10311a is fixed with a rubber joint 1044 and is connected to the inner side of the side chamber plate 1022 by the rubber joint. One end of the main chamber plate connecting rod away from the primary fixing seat interface 10311a is fixed with the rubber joint 1044 and is connected to the inner side of the main chamber plate 1021 by the rubber joint.

As shown in Fig. 2, the bogie frame chamber further includes a second connecting frame 1032 including a brake hanging bracket connecting rod 10321, one end of which is connected to a position of the inner side of the side chamber plate away from the main chamber plate by a rubber joint, and the other end of which is provided with a brake hanging bracket interface 10321a. The brake hanging bracket interface 10321a of the brake hanging bracket connecting rod is employed to connect with the brake unit hanging bracket of the bogie frame. Specifically, the brake hanging bracket connecting rod is consistent with the height of the brake hanging bracket of the bogie frame in the height direction, and the brake hanging bracket connecting rod has a simple structure and less material. More specifically, Fig. 12 is an exploded schematic view of the connection between the brake hanging bracket connecting rod of the second connecting frame and the brake unit hanging bracket of the bogie frame. As shown in Fig. 12, the brake hanging bracket interface 10321a of the brake hanging bracket connecting rod and the brake unit hanging bracket of the bogie frame are fixedly connected by a chamber fixing bolt 1041 and a chamber fixing nut 1042.

The second connecting frame further includes a crossbeam connecting rod 10322, one end of which is connected to a position of the inner side of the side chamber plate 1022 away from the main chamber plate by a rubber joint, and the other end of which is provided with a crossbeam interface 10322a. The crossbeam connecting rod 10322 is located below the brake hanging bracket connecting rod 10321. The crossbeam interface 10322a of the crossbeam connecting rod 10322 is employed to connect with the crossbeam of the bogie frame. Specifically, the crossbeam connecting rod 10322 is consistent with the height of the crossbeam of the bogie frame in the height direction, and the crossbeam connecting rod 10322 has a simple structure and less material. More specifically, Fig. 13 is an exploded schematic view of the connection between the crossbeam connecting rod 10322 of the second connecting frame and the crossbeam of the bogie frame. As shown in Fig. 13, the crossbeam interface 10322a of the crossbeam connecting rod 10322 and the crossbeam of the bogie frame are fixedly connected by a chamber fixing bolt 1041, a chamber gasket 1043, and a chamber fixing nut 1042. Fig. 15 is a perspective view of the second connecting frame of the bogie frame chamber shown in Fig. 2. As shown in Fig. 15, one end of the crossbeam connecting rod 10322 away from the crossbeam interface 10322a is fixed with the rubber joint 1044 and is connected to the inner side of the side chamber plate 1022 by the rubber joint 1044. One end of the brake hanging bracket connecting rod 10321 away from the brake hanging bracket interface 10321a is fixed with the rubber joint 1044, and is connected to the inner side of the side chamber plate through the rubber joint 1044.

As shown in Fig. 2, the second connecting frame 1032 further includes a second connecting frame reinforcing rod 10323, one end of which is fixed with the brake hanging bracket connecting rod 10321, and the other end of which is fixed with the crossbeam connecting rod. The second connecting frame reinforcing rods 10323 are two and arranged in parallel. The second connecting frame reinforcing rod 10323 makes the strength of the whole second connecting frame 1032 higher.

With the second connecting frame as a whole structure, one end of the second connecting frame is connected to the bogie frame by the brake hanging seat interface and the crossbeam interface, and the other end of the second connecting frame is connected to the side chamber plate by the brake hanging seat connecting rod and the crossbeam connecting rod through the rubber joint, thus realizing the connection between the bogie frame and the side chamber plate. With the rubber joint, attenuating vibration of the bogie frame chamber during vehicle running.

The chamber body assemblies are two, and the crossbeam interfaces 10322a of the two crossbeam connecting rods are connected, and the connection is further to connect with the crossbeam of the bogie frame. The crossbeam interface of the crossbeam connecting rod with this structure saves space for connecting with the crossbeam.

In order to fix the main chamber plate and the side chamber plate, the bogie frame chamber further includes corresponding structures. As shown in Fig. 3, two sides of the main chamber plate are respectively provided with the main chamber plate through holes 10211. The side of the side chamber plate near the main chamber plate has a step hole-shaped side chamber plate through hole 10221, and the larger diameter section is away from the main chamber plate and the hole wall is an anti-rotation polygon structure. One end of the screw of the first anti-rotation bolt 1024 near the head is formed with a first anti-rotation platform 10241 in the shape of a straight prism. The screw of the first anti-rotation bolt 1024 passes through the side chamber plate through hole 10221 and the main chamber plate through hole 10211, and the first anti-rotation platform 10241 is snapped into a section with a larger diameter of the side chamber plate through hole 10221, and is matched with the first nut 10251 to fix the main chamber plate and the side chamber plate.

The outer peripheral surface of the straight prism of the first anti-rotation platform of the first anti-rotation bolt is matched with the hole wall shape of the section with a larger diameter of the side chamber plate through hole, so that the straight prism of the first anti-rotation platform is snapped into the section with a larger diameter of the side chamber plate, to prevent rotation of the first anti-rotation platform inside the side chamber plate through hole and improve the stability. The head of the first anti-rotation bolt is snapped into one side of the side chamber plate through hole. Specifically, the size of the first anti-rotation platform in the axial direction perpendicular to the first anti-rotation bolt is larger than the diameter of the screw of the first anti-rotation bolt.

Fig. 3 is an exploded schematic view of the main chamber plate and the side chamber plate of the bogie frame chamber shown in Fig. 2. Fig. 4 is an exploded view of the connecting structure of the main chamber plate and the side chamber plate shown in Fig. 3. Fig. 5 is an assembly view of the connecting structure of the main chamber plate and the side chamber plate shown in Fig. 4. Fig. 6 is a schematic view of the first anti-rotation seat of the bogie frame chamber shown in Fig. 3. As shown in Figs. 3 to 6, the main chamber plate includes a main chamber plate mounting seat, and the main chamber plate mounting seat includes a main chamber plate mounting seat body 10212 formed on two sides of the main chamber plate 1021; and an anti-rotation seat 1026 fixed with the main chamber plate mounting seat body 10212. The anti-rotation seat 1026 is provided with two anti-rotation protruding bars 10261 arranged facing each other. The main chamber plate through hole 10211 is arranged between the two anti-rotation protruding bars 10261 and penetrates the main chamber plate mounting seat body 10212 and the anti-rotation seat 1026. The middle of the anti-rotation protruding bars 10261 is provided with an anti-rotation recess 10262. The first anti-rotation flexible strip 1027 has a circular through hole. The screw of the first anti-rotation bolt 1024 further passes through the circular through hole of the first anti-rotation flexible strip 1027, the first nuts 10251 are respectively pressed on the two sides of the first anti-rotation flexible strip 1027, and the two ends of the first anti-rotation flexible strip 1027 are respectively snapped into the anti-rotation recess 10262.

The first anti-rotation flexible strip can produce certain elastic deformation, so that the first anti-rotation flexible strip can adapt to certain deformations and attenuate certain vibrations. The anti-rotation recess of the anti-rotation protruding bar and the cooperation of the first anti-rotation flexible strip realize the anti-rotation at one end of the screw of the first bolt, so that the fixation of the main chamber plate and the side chamber plate is more stable. Specifically, the anti-rotation seat is fixed with the main chamber plate mounting seat body by bolts and gaskets. The advantage of setting the anti-rotation seat relatively independently is that after the anti-rotation seat is damaged by force, only need to replace the anti-rotation seat, and the main chamber plate is not affected.

As shown in Fig. 6, the main chamber plate through hole 10211 has an elongated shape. The advantage of the elongated shaped main chamber plate through hole is that the machining accuracy of which is lower and the assembly is easier to realize.

As shown in Figs. 4 and 5, the first anti-rotation flexible strip 1027 has an omega shape, two flanges at two bottom ends of the first anti-rotation flexible strip 1027 are respectively snapped into two anti-rotation recesses 10262, and a circular through hole of the first anti-rotation flexible strip 1027 is provided at the cross arm at the top end of the first anti-rotation flexible strip. The omega shaped first anti-rotation flexible strip can provide elastic deformation of movement, which can adapt to certain deformation and attenuate certain vibrations. The gasket is further disposed between the first nut 10251 and the first anti-rotation flexible strip 1027.

As shown in Figs. 2 and 3, a plurality of main chamber plate mounting seat bodies 10212 are provided at intervals from top to bottom on two sides of the main chamber plate. The number of anti-rotation seats 1026, the first anti-rotation flexible strips 1027, and the side chamber plate through holes 10221 are matched with the number of main chamber plate mounting seats. Specifically, three main chamber plate mounting seats are disposed at intervals from top to bottom on two sides of the main chamber plate. The number of the main chamber plate mounting seats disposed at intervals from top to bottom on two sides of the main chamber plate is selected according to the actual situation.

In order to realize the connection between the first connecting frame, the second connecting frame, and the chamber plate, the bogie frame chamber further includes corresponding structures, and the chamber plate includes the main chamber plate and the side chamber plate. Fig. 7 is a partially enlarged view of the bogie frame chamber shown in Fig. 2. Fig. 8 is a partially enlarged view of the bogie frame chamber shown in Fig. 7. Fig. 9 is an exploded schematic view of the side chamber plate and the first connecting frame of the bogie frame chamber shown in Fig. 2. Fig. 10 is an exploded view of the connecting structure of the side chamber plate, the first connecting frame and the second connecting frame shown in Fig. 8. As shown in Fig. 7, Fig. 8, Fig. 9 and Fig. 10, the bogie frame further includes an anti-rotation mounting structure including an anti-rotation protruding seat 10222 formed at the inner side of the chamber plate and having a step hole. The hole wall of a section with a larger diameter in the step hole of the anti-rotation protruding seat is an anti-rotation polygon structure. The chamber plate includes the main chamber plate and the side chamber plate. An anti-rotation indenting seat 1033 is provided with a through hole, and the anti-rotation indenting seat 1033 is fastened on the anti-rotation protruding seat. A second anti-rotation bolt 1034, one end near the head is formed with a second anti-rotation platform 10341 in the shape of a straight prism. The screw of the second anti-rotation bolt 1034 passes through the step hole of the anti-rotation protruding seat 10222 and the through hole of the anti-rotation indenting seat 1033, and the second anti-rotation platform 10341 is snapped into a section with a larger diameter in the step hole of the anti-rotation protruding seat 10222, and is cooperated with the second nut 10351 to fix the anti-rotation protruding seat and the chamber plate.

The straight prism of the second anti-rotation platform of the second anti-rotation bolt is matched with the hole wall shape of the section with a larger diameter of the step hole of the anti-rotation protruding seat, so that the straight prism of the second anti-rotation platform is snapped into the section with a larger diameter of the step hole of the anti-rotation protruding seat, to prevent rotation of the straight prism of the second anti-rotation platform inside the step hole and improve the stability. The head of the second anti-rotation bolt is snapped into the other side of the chamber plate. Specifically, the anti-rotation protruding seat and the chamber plate are integrated structures.

As shown in Figs. 7, 8, and 9, the anti-rotation protruding seat 10222 has a rectangular shape, and the anti-rotation indenting seat 1033 has a rectangular shape. In a case where the anti-rotation indenting seat 1033 is fastened on the anti-rotation protruding seat 10222, the anti-rotation indenting seat 1033 cannot rotate relative to the anti-rotation protruding seat 10222 due to the rectangular shapes. Two anti-rotation grooves are provided symmetrically on the side of the anti-rotation indenting seat 1033 away from the anti-rotation protruding seat 10222. The second anti-rotation flexible strip 1036 has a circular through hole. The screw of the second anti-rotation bolt 1034 further passes through the circular through hole of the second anti-rotation flexible strip 1036, the second nuts 10351 are respectively pressed on two sides of the second anti-rotation flexible strip 1036, and the second anti-rotation flexible strip 1036 is snapped into the anti-rotation grooves.

The second anti-rotation flexible strip can produce certain elastic deformations, so that the anti-rotation mounting structure can adapt to certain deformations and alleviate certain vibrations. The anti-rotation groove of the anti-rotation indenting seat and the cooperation of the second anti-rotation flexible strip realize the anti-rotation at one end of the screw of the second bolt, so that the fixing of the chamber plate and the anti-rotation mounting structure is more stable. The through hole of the anti-rotation indenting seat has an elongated shape, which requires lower machining accuracy and is easier to assemble.

As shown in Fig. 10, the second anti-rotation flexible strip 1036 has an omega shape, two flanges of the bottom end of the second anti-rotation flexible strip 1036 are respectively snapped into two anti-rotation grooves, and a circular through hole of the second anti-rotation flexible strip is disposed at the cross arm of the top end of the second anti-rotation flexible strip. The omega shaped second anti-rotation flexible strip can provide elastic deformation of movement, which can adapt to certain deformation and attenuate certain vibrations. Specifically, a gasket is further disposed between the second nut and the second anti-rotation flexible strip.

As shown in Fig. 7, the anti-rotation mounting structures are provided at positions where the side chamber plate 1022 is connected to the side chamber connecting rod 10311 of the first connecting frame, where the side chamber plate 1022 is connected to the brake hanging bracket connecting rod 10321 of the second connecting frame, and where the side chamber plate 1022 is connected to the crossbeam connecting rod 10322 of the second connecting frame. The side chamber connecting rod 10311 and the crossbeam connecting rod 10322 are each connected to the anti-rotation mounting structure at respective positions. The anti-rotation mounting structure realizes safe and reliable connection, quick disassembly and assembly, can adapt to certain deformations, and alleviate certain vibrations.

As shown in Fig. 7, the side chamber plate connecting rod 10311 of the first connecting frame is connected to the side chamber plate 1022 by the anti-rotation mounting structure, the anti-rotation protruding seat 10222 is formed on the inner side of the side chamber plate 1022, and the anti-rotation protruding seat 10222 has two step holes arranged in parallel. Correspondingly, the anti-rotation indenting seat 1033 further has two elongated through holes disposed in parallel transversely, two second anti-rotation flexible strip 1036, and two second bolts. The side chamber plate connecting rod 10311 of the first connecting frame is connected under two elongated through holes disposed in parallel in the transverse direction of the anti-rotation recess 1033 by a rubber joint. The lateral force applied on the side chamber plate connecting rod of the first connecting frame is larger, and the two elongated shaped through holes of the anti-rotation indenting seat are disposed transversely in parallel, so that the force applied on the side chamber plate connecting rod is more dispersed.

As shown in Fig. 7, the bogie frame chamber further includes a chamber plate connecting rod mounting seat 10213 fixed with the inner side of the main chamber plate by bolts, steel wire threads, and gaskets, and the main chamber plate connecting rod 10312 of the first connecting frame is fixed with the chamber plate connecting rod mounting seat by a rubber joint. In this way, the main chamber plate connecting rod and the main chamber plate are stably connected.

The brake hanging bracket connecting rod 10321 of the second connecting frame is connected to the side chamber plate 1022 by the anti-rotation mounting structure, and the anti-rotation protruding seat is formed inside the side chamber plate, and the anti-rotation protruding seat has two circular through holes in the shape of step holes arranged in parallel upper and lower. Correspondingly, the anti-rotation indenting seat further has two elongated through holes disposed in parallel upper and lower, two second anti-rotation flexible strip, and two second bolts. The brake hanging bracket connecting rod 10321 of the second connecting frame is connected between two elongated through holes disposed in parallel upper and lower of the anti-rotation indenting seat by a rubber joint.

The crossbeam connecting rod 10322 of the second connecting frame is connected to the side chamber plate 1022 by the anti-rotation mounting structure, and the anti-rotation protruding seat is formed on the inner side of the side chamber plate, and the anti-rotation protruding seat has two circular through holes in the shape of step holes disposed in parallel back and forth. Correspondingly, the anti-rotation indenting seat 1033 further has two elongated through holes disposed in parallel back and forth, two second anti-rotation flexible strips, and two second bolts. The crossbeam connecting rod 10322 of the second connecting frame is connected between two elongated through holes disposed in parallel back and forth of the anti-rotation indenting seat 1033 by a rubber joint. It is necessary to consider the direction of the force applied by the connecting rod to which is connected, and further to consider the spatial characteristics of the position of the anti-rotation indenting seat.

### Embodiment 2

The bogie frame system of the embodiment of the present disclosure has the following characteristics in addition to the bogie frame system of the first embodiment.

The bogie frame of the bogie frame system of the embodiment further includes a crossbeam, a sidebeam, a wheelset, a traction device, a suspension device, and other components. A horizontal direction identical to the travel direction of the vehicle is defined as a longitudinal direction, a horizontal direction perpendicular to the longitudinal direction is defined as a transverse direction, and a direction perpendicular to the horizontal direction is defined as a vertical direction or an upright direction. The crossbeam is extended transversely in the bogie frame.

Fig. 16 is a perspective view of the crossbeam provided by the embodiment of the present disclosure, and Fig. 17 is a perspective view of the crossbeam single-structure provided by the embodiment of the present disclosure. As shown in Figs. 16 and 17, the present embodiment provides the crossbeam of the bogie frame, which includes two crossbeam single-structures 2, which are disposed sequentially in the transverse direction and connected to each other to form the crossbeam.The crossbeam single-structure 2 includes a crossbeam main body 21 and a crossbeam connecting arm 22 both of which extended in the transverse direction. An inner end surface of the crossbeam main body 21 facing the other crossbeam main body 21 has a first mounting area and a second mounting area. One end of the crossbeam connecting arm 22 is fixed to the first mounting area and the other end is connected to the second mounting area in the other crossbeam single-structure 2 by a crossbeam connecting device.

The crossbeam main body 21 is assembled with the sidebeams to form a frame of the bogie frame and serves as a main body member of the bogie frame. Specifically, a sidebeam mounting interface for assembling the sidebeam is provided on the middle top surface of the crossbeam main body 21, and the sidebeam is located above the crossbeam main body 21.

In the technical proposal provided by the embodiment of the present disclosure, two crossbeam single-structures are connected to form the crossbeam of the bogie frame, wherein the crossbeam single-structure includes a crossbeam main body and a crossbeam connecting arm, and the inner end surface of the crossbeam main body facing another crossbeam single-structure is provided with a first mounting area and a second mounting area. The middle top surface of the crossbeam main body is employed for assembling with the sidebeam of the bogie frame. The crossbeam connecting arm is extended in a direction parallel to the crossbeam main body, one end of which is fixed to the first mounting area in the crossbeam main body, and the other end of which is connected to the second mounting area of the crossbeam main body in another crossbeam single-structure through the crossbeam connecting device. The structure of the crossbeam provided by the embodiment is different from that of the crossbeam in any conventional bogie frame, and the assembly mode between the crossbeam and the sidebeam is also different from the conventional mode. Moreover, the crossbeam provided by the embodiment is small in size, easy to produce, transport, and assemble, and can improve the assembly efficiency.

On the basis of the above technical proposal, the embodiment provides a specific implementation mode of the crossbeam: The crossbeam is made of cast aluminum alloy or other lightweight materials, and the casting mold can be made by additive manufacturing technology to reduce the weight. As shown in Fig. 17, the width of the end portion of the crossbeam main body 21 facing the other crossbeam single-structure 2 is larger than the width of the middle portion of the crossbeam main body 21. The end surface of the crossbeam main body 21 facing the other crossbeam single-structure 2 is defined as an inner end surface, and the first mounting area and the second mounting area are respectively located on the inner end surface of the crossbeam main body 21, specifically arranged at two ends along the width direction of the inner end surface.

The distance between the first mounting area and the second mounting area is remained, so that there is a gap between the two crossbeam connecting arms 22 for receiving a traction center pin of the bogie frame traction device. The top of the traction center pin is connected to the car body, and the bottom of the traction center pin is inserted into the gap between the two crossbeam connecting arms 22 to transmit traction or braking force with the crossbeam.

For the connection between the two crossbeam single-structures 2, a rigid connection can be employed, for example by bolting the crossbeam connecting arm 22 to the other crossbeam main body 21. Or the following mode provided by the embodiment can be adopted:

In an implementation mode: a crossbeam connecting pin is adopted, and two ends along the axial direction of the crossbeam connecting pin are respectively defined as a first end and a second end. The first end is connected to the crossbeam connecting arm 22, and the second end is inserted and fixed in the first pin hole opened in the second mounting area. The first end of the crossbeam connecting pin and the crossbeam connecting arm 22 can be bolted, welded, pressed, and installed, and the second end fixed in the second pin hole can be welded, pressed, and installed or bolted through gaskets.

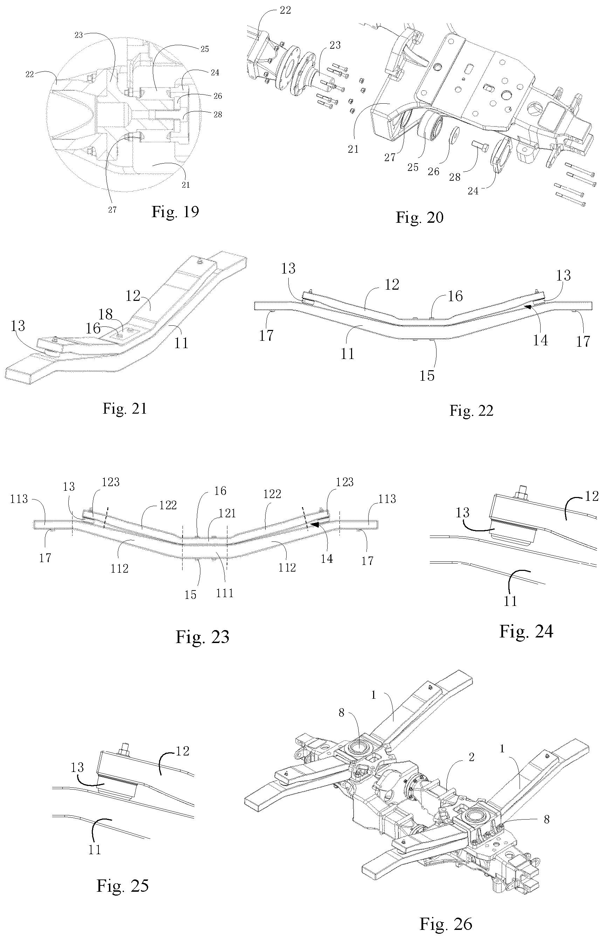

Another implementation mode: Fig. 18 is a sectional view of the crossbeam provided by the embodiment of the present disclosure, Fig. 19 is a partially enlarged view of area A in Fig. 18, and Fig. 20 is an exploded view of the two crossbeams connected by the embodiment of the present disclosure. As shown in Figs. 18 to 20, the crossbeam connecting device includes a crossbeam connecting pin 23, a crossbeam connecting flange 24, a crossbeam connecting joint 25, and a crossbeam connecting gasket 26.

The crossbeam connecting joint 25 has an annular structure, is press-fitted in the first pin hole 210, and is relatively fixed to the crossbeam main body 21. In Fig. 19, the axial direction of the crossbeam connecting joint 25 is extended in the left-right direction, the left end thereof is defined as a first end and the right end as a second end.

The second end of the crossbeam connecting pin 23 is press-fitted in the crossbeam connecting joint 25 and is relatively fixed to the crossbeam connecting joint 25. The crossbeam connecting gasket 26 is provided at the second end surface of the crossbeam connecting pin 23 and is coaxial with the crossbeam connecting pin 23. The outer diameter of the crossbeam connecting gasket 26 is larger than the inner diameter of the crossbeam connecting joint 25, and the inner diameter of the crossbeam connecting gasket 26 is smaller than the outer diameter of the crossbeam connecting pin 23. The second end of the crossbeam connecting pin 23 is provided with an internal threaded hole. After passing through the crossbeam connecting gasket 26 from the right side, the crossbeam connecting bolt 28 is screwed into and fixed to the internal threaded hole of the crossbeam connecting pin 23, thereby achieving a fixed connection between the crossbeam connecting pin 23 and the crossbeam connecting joint 25.

The crossbeam connecting flange 24 has a mounting outer ring and an inner ring, the inner ring is inserted into the first pin hole 210 and abuts against the axial second end of the crossbeam connecting joint 25, and the outer ring of the crossbeam connecting flange 24 is connected to the crossbeam main body 21 by bolts, thereby achieving a fixed connection between the crossbeam connecting joint 25 and the crossbeam main body 21.

Further, the crossbeam connecting device further includes at least one beam mounting ring 27 disposed in the first pin hole 210 and between the left end of the crossbeam connecting joint 25 and the crossbeam main body 21. In the assembly process, the crossbeam connecting pin 23 sequentially passes through at least one beam mounting ring 24, the crossbeam connecting joint 25 and the crossbeam connecting gasket 26 from the left side and is fixed to the crossbeam connecting bolt 28. The crossbeam mounting ring 27 adjusts the dimensional deviation between the crossbeam connecting joint 25 and the crossbeam main body 21. The number and thickness of the crossbeam mounting ring 27 can be designed according to the specific dimensional deviation, so that the crossbeam connecting joint 25 can be fixed in the crossbeam main body 21 to avoid relative movement and vibration of the crossbeam main body 21 during the operation of the vehicle.

The first end of the crossbeam connecting pin 23 is inserted in the second pin hole provided on the end surface of the crossbeam connecting arm 22, and the outer circumferential surface of the crossbeam connecting pin 23 is extended outward in the radial direction to form a mounting flange which is connected to the flange provided at the end of the crossbeam connecting arm 22 by bolts. The radial force between the crossbeam connecting pin 23 and the crossbeam connecting arm 22 is received by the end of the crossbeam connecting arm 22 inserted into the second pin hole, so that the bolt connected to the crossbeam connecting arm 22 is prevented from receiving shear force.

The assembly process of the crossbeam connecting device for connecting the crossbeam single-structure includes the following steps: firstly, the first end of the crossbeam connecting pin 23 is bolted to the crossbeam connecting arm 22, and then the crossbeam connecting pin 23 is connected to the crossbeam main body 21. The process of connecting the crossbeam connecting pin 23 to the crossbeam main body 21 is to insert the crossbeam mounting ring 27 into the first pin hole 210 of the crossbeam main body 21 according to the measured dimensional deviation, press-fit the crossbeam connecting joint 25, press-fit the crossbeam connecting pin 23 into the crossbeam connecting joint 25, place the crossbeam connecting gasket 26, place the crossbeam connecting bolt 28 through the crossbeam connecting gasket 26 and screw the crossbeam connecting pin 23 to fix, and finally, abut the crossbeam connecting flange 24 at the right end of the crossbeam connecting joint 25 and fix the crossbeam main body 21 by bolts.

The axial force, radial force, torsional force, and deflection deformation between the two crossbeam single-structures 2 are all borne by the crossbeam connecting joints 25.

Further, the crossbeam connecting joint 25 includes a metal shell, a metal inner ring, and a rubber block arranged therebetween. The rubber block is vulcanized with the metal shell and the metal inner ring to form an integrated structure, so that the crossbeam connecting joint 25 has a certain deformation ability. With the crossbeam connecting joint 25 provided in the present embodiment, deflection of a certain angle can be generated between two crossbeam single-structures. For example, in a case where there is a pit under one side of the track and the bogie frame passes through this position, the wheels on two sides are restrained greatly by the conventional rigid crossbeam, which leads to the suspension of the wheels above the pit and easy derailment under the condition of lateral force. However, the flexible deflection is generated between the two crossbeam single-structures through the crossbeam connecting joint 25, so that the wheels above the pit are still attached to the track, and the driving safety is improved. Compared with the conventional rigid crossbeam, the crossbeam provided by the embodiment is applied to the bogie frame, and has better adaptability to complex and harsh lines, higher riding comfort, and higher safety.

The crossbeam of a conventional bogie frame is welded. There are many factors influencing the welding quality, such as ambient temperature, welding flux composition, welding temperature, etc. Poor welding quality will reduce the reliability of the bogie frame. In the embodiment, the bolt connection mode is adopted between the two crossbeam single-structures, so that the reliability is higher.

On the basis of the above technical proposal, the crossbeam single-structure 2 further provides a connecting interface of a plurality of components, thus improving the integration.

For example, the middle top surface of the crossbeam main body 21 is provided with an interface for assembling with the sidebeam, and the sidebeam is provided above the crossbeam main body 21. Specifically, a sidebeam positioning pin hole 211 is provided on the middle top surface of the crossbeam main body 21 for passing through the positioning pin provided at the bottom of the sidebeam to restrict the horizontal movement of the sidebeam.

Further, the number of sidebeam positioning pin holes 211 is two disposed sequentially in the longitudinal direction. One of the sidebeam positioning pin holes 211 is a circular hole and the other is an oblong circular hole extended longitudinally in the longitudinal direction. Correspondingly, two positioning pins are disposed at the bottom of the sidebeam, which are inserted into the circular hole and the oblong hole respectively. In the production process, due to the existence of measuring tools, measuring methods, production equipment, and other factors, the distance between the two positioning pins at the bottom of the sidebeam will have an actual deviation within the allowable range. If it cannot be assembled with the crossbeam due to actual deviation, the production takt time will be affected, and then the production progress will be delayed. However, the matching mode of the circular hole and the oblong hole can adapt to the actual deviation between the two positioning pins, complete the assembly of the sidebeam and the crossbeam normally, and improve production efficiency.

Fig. 21 is a perspective view of the sidebeam provided by the embodiment of the present disclosure, Fig. 22 is a front view of the sidebeam provided by the embodiment of the present disclosure, Fig. 23 is another front view of the sidebeam provided by the embodiment of the present disclosure, Fig. 24 is a schematic view of the sidebeam provided by the present embodiment bearing a first vertical load, and Fig. 25 is a schematic view of the sidebeam provided by the present embodiment bearing a second vertical load.

As shown in Figs. 21 to 25, the sidebeam 1 of the bogie frame provided by the embodiment is a double-layer sidebeam, including a main sidebeam plate 11, an auxiliary sidebeam plate 12, and an elastic stopper 13. The main sidebeam plate 11 and the auxiliary sidebeam plate 12 are made of elastic composite fiber material, which has the advantages of light weight, elastic deformation, and the like. The main sidebeam plate 11 and the auxiliary sidebeam plate 12 are stacked, and are symmetrical laterally as shown in Fig. 22. The auxiliary sidebeam plate 12 is stacked above the main sidebeam plate 11. The middle bottom surface of the auxiliary sidebeam plate 12 is in contact with the top surface of the main sidebeam plate 11. Two ends of the auxiliary sidebeam plate 12 are suspended, i.e. there is a buffer gap 14 between the bottom surfaces of two ends of the auxiliary sidebeam plate 12 and the top surface of the main sidebeam plate 11.

An elastic stopper 13 is provided at the end of the auxiliary sidebeam plate 12 and is located in the buffer gap 14. In a case where the sidebeam 1 is not subjected to a vertical load, there is a certain gap between the elastic stopper 13 and the upper surface of the main sidebeam plate 11. In a case where the middle portion of the sidebeam is subjected to the first vertical load, the main sidebeam plate 11 is slightly elastically deformed, and there is a gap between the elastic stopper 13 and the top surface of the main sidebeam plate 11, as shown in Fig. 24. In a case where the middle portion of the sidebeam is subjected to a greater second vertical load, the main sidebeam plate 11 and the auxiliary sidebeam plate 12 have greater elastic deformation, and the middle portions of the main sidebeam plate 11 and the auxiliary sidebeam plate 12 are pressed and moved downward, and two ends move upward and inward until the elastic stopper 13 is in contact with the top surface of the main sidebeam plate 11, as shown in Fig. 25.

In a case where the vehicle is empty or full, the vehicle load is small, and the elastic stopper 13 is not in contact with the main sidebeam plate 11, as shown in Fig. 24. Only the main sidebeam plate 11 is bearing with the vertical force and transmits to the primary suspension device 4, only the main sidebeam plate 11 has elastic deformation, and the auxiliary sidebeam plate 12 does not bear the force and does not provide support stiffness.

In a case where the vehicle is overloaded and the vehicle load is large, the auxiliary sidebeam plate 12 moves down, and the elastic stopper 13 is in contact with the main sidebeam plate 11, as shown in Fig. 25. At this time, the load of the vehicle is borne by the main sidebeam plate 11 and the auxiliary sidebeam plate 12 at the same time and provides vertical stiffness, which ensures that the support stiffness provided by the bogie frame increases with the increase of the load of the vehicle, so that the vibration amplitude of the carriage is in a small range under different load conditions, and the riding comfort is improved.

On the basis of the above technical solution, the embodiment provides an embodiment of the sidebeam:

As shown in Fig. 23, the main sidebeam plate 11 includes a main plate middle section 111, a main plate transition section 112, and a main plate connection section 113. The main plate transition section 112 and the main plate connection section 113 are extended from two ends of the main plate middle section 111 respectively. The main plate connection section 113 is located at the end of the main sidebeam plate 11. The height of the main plate middle section 111 is lower than the height of the main plate connection section 113, and the main plate transition section 112 is connected between the main plate middle section 111 and the main plate connection section 113. The main plate transition section 112 has an oblique upward shape from the middle to the end of the main sidebeam plate 111. The main plate connection section 113 is adapted to connect to the primary suspension device. The thickness of the main plate middle section 111 is larger than the thickness of the main plate connection section 113, thereby increasing the support strength of the main plate middle section 111. The thickness of the main plate transition section 112 gradually decreases in the direction from the main plate middle section 111 to the main plate connection section 113.

In a specific mode, the thickness of the main plate middle section 111 is uniform and is extended in the horizontal direction. The thickness of the main plate connection section 113 is uniform and is extended in the horizontal direction. The main plate transition section 112 is extended obliquely upward and has thickness gradually decreased in the direction from the main plate middle section 111 to the main plate connection section 113.

As shown in Fig. 23, the auxiliary sidebeam plate 12 includes an auxiliary plate middle section 121 an auxiliary plate transition section 122, and an auxiliary plate connection section 123. The auxiliary plate transition section 122 and the auxiliary plate connection section 123 respectively are extended from two ends of the auxiliary plate middle section 121. The height of the auxiliary plate middle section 121 is lower than the height of the auxiliary plate connection section 123, and the auxiliary plate transition section 122 is connected between the auxiliary plate middle section 121 and the auxiliary plate connection section 123. In a specific mode, the thickness of the auxiliary plate middle section 121 is uniform and is extended in the horizontal direction. The thickness of the auxiliary plate transition section 122 can be uniformly provided or not uniformly provided and can be extended obliquely upward. The auxiliary plate connection section 123 is located at the end of the auxiliary plate transition section 122 and is extended in the same direction as the auxiliary plate transition section 122. The vertical projection of the auxiliary board connection section 123 is on the main plate transition section 122, and the buffer gap 14 is formed between the auxiliary board connection section 123, the auxiliary board transition section 122, and the main plate transition section 112.

The elastic stopper 13 is provided at the auxiliary plate connection section 123, and in a case where the load on the sidebeam 1 is large, the elastic stopper 13 is in contact with the main plate transition section 112. The elastic stopper 13 is a structure with a certain stiffness and a certain elastic buffer capacity. Specifically, the embodiment provides an elastic stopper 13 including a stopper block and a stopper connector. The stopper block includes a metal shell and a rubber block disposed inside the metal shell, and the rubber block and the metal shell form an integrated structure through the vulcanization process. One end of the stopper connector is connected to the metal shell, and the other end is connected to the auxiliary sidebeam plate 12.

In the bogie frame provided by the embodiment, the sidebeam 1 is disposed above the crossbeam 2. The bottom surface of the main plate middle section 111 is provided with a first sidebeam positioning pin 15 for positioning with the crossbeam 2, and the first sidebeam positioning pin 15 is extended in a direction perpendicular to the main plate middle section 111. In the assembly process, the positioning between the crossbeam 2 and the sidebeam 1 is realized by inserting the first sidebeam positioning pin 15 into the sidebeam positioning pin hole 211, so that there is no relative movement between the crossbeam and the sidebeam in the horizontal direction.

Both the main sidebeam plate 11 and the auxiliary sidebeam plate 12 are made of an elastic composite fiber material, which can be, for example, a carbon fiber composite material, a glass fiber composite material, or a carbon fiber and a glass fiber composite material. On the basis of the above materials, other composite materials can also be added.

In a specific mode, the number of the first side member positioning pins 15 is two, and the first sidebeam positioning pins 15 are disposed on intervals along the longitudinal direction of the main sidebeam plate 11. The first sidebeam positioning pin 15 can be made of metal or a material having higher hardness. In a case where the first sidebeam positioning pin 15 is made of metal and the main sidebeam plate 11 is made of carbon fiber composite material, a metal member is pre-embedded in the bottom of the main sidebeam plate 11, the outer end of the metal member exposes the main sidebeam plate 11 and forms a flat plate structure, and the first sidebeam positioning pin 15 is fixed to the flat plate structure.

In addition, a second sidebeam positioning pin 16 is provided on the middle top surface of the auxiliary sidebeam plate 12 for positioning with the secondary suspension device of the bogie frame. The second sidebeam positioning pin 16 is extended in a direction perpendicular to the middle top surface of the auxiliary sidebeam plate 12. The number of the second sidebeam positioning pins 16 is two, and the second sidebeam positioning pins 16 are disposed on intervals along the longitudinal direction of the auxiliary sidebeam plate 12. The second sidebeam positioning pin 16 can be made of metal or a material having higher hardness. In a case where the second sidebeam positioning pin 16 is made of metal and the auxiliary sidebeam plate 12 is made of carbon fiber composite material, a positioning metal member 18 is pre-embedded in the bottom of the auxiliary sidebeam plate 12, the outer end of the positioning metal member 18 exposes the upper surface of the auxiliary sidebeam plate 12 and forms a flat plate structure, and the second sidebeam positioning pin 16 is fixed to the flat plate structure.

Further, the bottom surfaces of two ends of the main sidebeam plate 11 are provided with third sidebeam positioning pins 17 for positioning with the primary suspension device of the bogie frame. The third sidebeam positioning pins 17 are extended in a direction perpendicular to the bottom surface of the end of the main sidebeam plate 11. One of the third sidebeam positioning pins 17 is provided at each end of the main sidebeam plate 11. The third sidebeam positioning pin 17 can be made of metal or a material with higher hardness. In a case where the third sidebeam positioning pin 17 is made of metal and the main sidebeam plate 11 is made of carbon fiber composite material, a metal member can also be pre-embedded in the main sidebeam plate 11 with reference to the above method, and the portion of the metal member exposed from the bottom surface of the main sidebeam plate 11 is connected to the third sidebeam positioning pin 17.

Further, two secondary mounting platforms 212 protruded from the top surface of the crossbeam main body 21 are provided on the top surface of the crossbeam main body 21. A recessed area formed between the two secondary mounting platforms 212 can receive the sidebeam 1, and a sidebeam positioning pin hole 211 is provided in the recessed area.

Further, two secondary suspension mounting seats 8 are provided, which are respectively covered over the sidebeam 1 and connected to the crossbeam 2. A mounting channel penetrating in the longitudinal direction is formed between the secondary suspension mounting seat 8 and the crossbeam 2, the sidebeam 1 is penetrated in the mounting channel, and the middle portion of the sidebeam 1 is located in the mounting channel. The sidebeam 1 and the crossbeam 2 are two independent structures. In the assembly process, the sidebeam is first placed at the mounting position of the crossbeam 2, and then the secondary suspension mounting seat 8 is covered on the sidebeam 1 and assembled with the crossbeam 2.

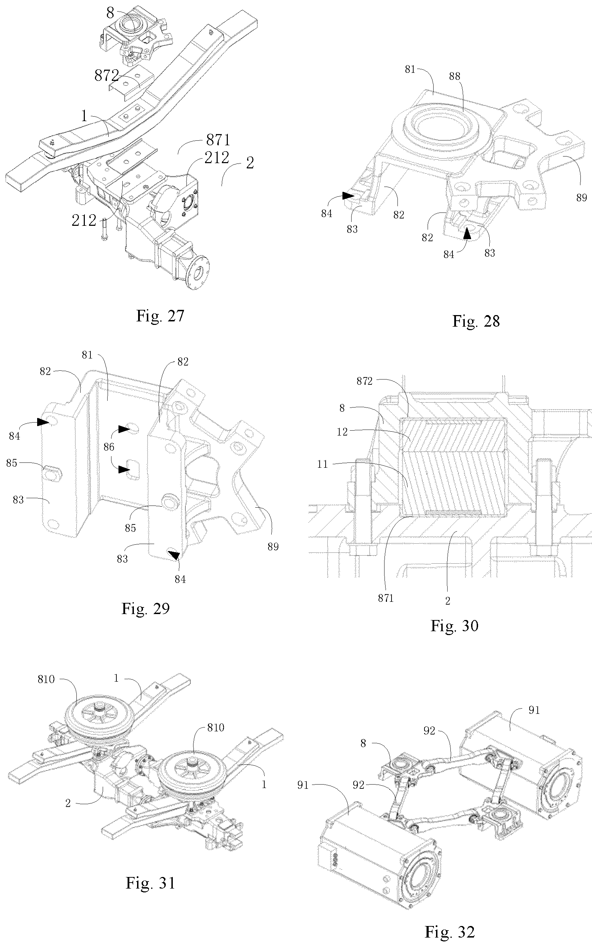

Specifically, Fig. 26 is a structural schematic view of the crossbeam, the sidebeam, and the secondary suspension mounting seat of the bogie frame provided by the embodiment of the present disclosure, Fig. 27 is an explosive view of the crossbeam, the sidebeam, and the secondary suspension mounting seat of the bogie frame provided by the embodiment of the present disclosure, Fig. 28 is a top view of the secondary suspension mounting seat provided by the embodiment of the present disclosure, Fig. 29 is a bottom view of the secondary suspension mounting seat provided by the embodiment of the present disclosure, and Fig. 30 is a partial sectional view of the assembly of the secondary suspension mounting seat, the sidebeam and the crossbeam provided by the embodiment of the present disclosure.

As shown in Figs. 26 to 30, the secondary suspension mounting seat 8 includes a mounting seat top plate 81 and a mounting seat side plate 82. The mounting seat top plate 81 is extended in the transverse direction and the top surface thereof to mount the secondary suspension device. The mounting seat side plate 82 is provided vertically and parallel to the longitudinal direction, and the number of the mounting seat side plates 82 is two. The top ends of the two mounting seat side plates 82 are respectively connected to two opposite edges of the mounting seat top plate 81. The bottom end of the mounting seat side plate 82 is bent outward to form a mounting seat connecting portion 83 which is fixedly connected to the secondary mounting platform 212.

Specifically, seat bolt holes 84 are provided at two ends of each mounting seat connecting portion 83, and secondary bolt holes 2121 are provided in the secondary mounting platform 212. The mounting seat connecting portion 83 is fixed to the secondary mounting platform 212 by connecting the mounting seat bolt holes 84 with bolts.

Further, a mounting seat positioning projection 85 is provided on the bottom surface of each mounting seat connecting portion 83, and the mounting seat positioning projection 85 on two of the mounting seat connecting portions 83 can be cylindrical. The secondary mounting platform 212 is correspondingly provided with secondary positioning holes 2122, one of which is a circular positioning hole and the other is an oblong positioning hole. One mounting seat positioning protrusion 85 is inserted into the circular positioning hole for accurate positioning, and the other mounting seat positioning protrusion 85 is inserted into the oblong positioning hole, which can adapt to the production deviation of the mounting seat positioning protrusion 85 and avoid the problem that the production takt time cannot be affected due to the production deviation.

Alternatively, the mounting seat positioning protrusion 85 on one of the mounting seat connecting portions 83 has a cylindrical shape, and the mounting seat positioning protrusion 85 on the other mounting seat connecting portion 83 has a long cylindrical shape. The secondary mounting platform 212 is provided with a circular positioning hole and an oblong positioning hole correspondingly, and a cylindrical mounting seat positioning protrusion 85 and a long cylindrical mounting seat positioning protrusion 85 are respectively inserted. The lower surface of the mounting seat top plate 81 of the secondary suspension mounting seat 8 is provided with sidebeam positioning counterbore 86, the number and position of which correspond to the second sidebeam positioning pins 16. During assembly, the sidebeam 1 and the secondary suspension mounting seat 8 are positioned by inserting the second sidebeam positioning pin 16 into the sidebeam positioning counterbore 86.

On the basis of the above technical solution, the bogie frame can also be improved as follows. As shown in Fig. 27 and Fig. 30, a lower transition plate 871 is disposed between the sidebeam 1 and the crossbeam 2 to cushion the force between the sidebeam 1 and the crossbeam 2. Particularly in a case where the sidebeam 1 is made of an elastic fiber composite material the lower transition plate 871 can reduce the wear of the sidebeam 1 and ensure the strength of the sidebeam 1.

Specifically, the lower transition plate 871 can be a plate-like structure parallel to the horizontal plane. Further, two sides of the lower transition plate 871 are extended upward to two sides of the sidebeam 1 and wrap the sidebeam 1. The lower transition plate 871 is provided with a through hole through which the first sidebeam positioning pin 15 passes.

Further, an upper transition plate 872 is provided between the sidebeam 1 and the secondary suspension mounting seat 8. The force between the sidebeam 1 and the secondary mounting seat 8 is cushioned. Particularly in a case where the sidebeam 1 is made of an elastic fiber composite material the upper transition plate 872 can reduce the wear of the sidebeam 1 and ensure the strength of the sidebeam 1.

Specifically, the upper transition plate 872 can be a plate-like structure parallel to the horizontal plane. Further, two sides of the upper transition plate 872 are extended downward to two sides of the sidebeam 1 and wrap the sidebeam 1. The upper transition plate 872 is correspondingly provided with a through hole through which the second sidebeam positioning pin 16 passes.

Fig. 31 is a structural schematic view of the bogie frame with the secondary suspension mounting seat disposed thereon provided by the embodiment of the present disclosure. Further, the upper surface of the mounting seat top plate 81 is connected to the secondary suspension device. The secondary suspension device can be a rubber stack, steel spring, or air spring. In the embodiment, an air spring 810 is employed as a secondary suspension device. As shown in Fig. 31, a secondary mounting portion 88 is provided on the upper surface of the mounting seat top plate 81, which is an annular structure protruded from the mounting seat top plate 81, and the center line of the secondary mounting portion 88 is extended in the vertical direction. The bottom of the air spring 810 is inserted in the secondary mounting portion 88 to limit the horizontal direction.

Fig. 32 is a structural schematic view of the secondary suspension mounting seat provided by the embodiment of the present disclosure, which is connected to the traction motor through the motor balancing link. As shown in Figs. 28, 29, and 32, the secondary suspension mounting seat 8 is further provided with a motor mounting portion 89 for connecting one end of the motor balancing link 92, and the other end of the motor balancing link 92 is connected to the shell of the traction motor 91 provided on the wheelset. The traction motor 91 is a direct driver, which is connected to the shaft 31 in the wheelset 3 and directly drives the shaft 31 to rotate, thus driving the wheels 32 to rotate.

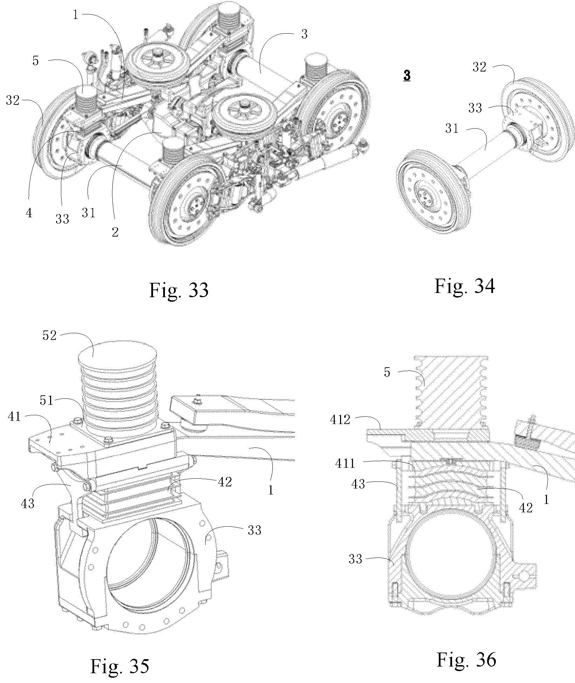

Fig. 33 is a structural schematic view of the bogie frame provided by the embodiment of the present disclosure, Fig. 34 is a structural schematic view of the wheelset in the bogie frame provided by the embodiment of the present disclosure, and Fig. 35 is a partial schematic view of the bogie frame provided by the embodiment of the present disclosure with a safety stopper device. As shown in Figs. 33 to 35, the bogie frame provided in the embodiment includes the sidebeam 1, the crossbeam 2, the wheelset 3 and the primary suspension device 4.

The number of wheelsets 3 is two, which are arranged on two sides of the crossbeam 2 and located below the end of the sidebeam 1. The wheelset 3 includes an shaft 31, wheels 32, and an shaft box 33. The number of wheels 32 is two, which are symmetrically disposed on the shaft 31. The number of shaft boxes 33 is two, which are symmetrically disposed on the shaft 31. The shaft box 33 can be located inside or outside the wheel 32. In the embodiment, the shaft box 33 is located inside the wheel 32 as an example.

The primary suspension device 4 is provided between the sidebeam 1 and the shaft box 33 for transmitting a vertical force between the sidebeam 1 and the shaft box 33, and also for buffering vibration between the shaft box 33 and the sidebeam 1. The first suspension device has certain stiffness and elastic deformation ability, and the elastic deformation direction is extended vertically.

In addition, the bogie frame provided in the embodiment further includes a safety stopper device 5, which is disposed on the top of the primary suspension device 4, and there is a gap between the safety stopper device 5 and the car body during normal operation of the vehicle. In a case where the sidebeam 1 fails, the car body falls on the safety stopper device 5, and the safety stopper device 5 is bearing the car body load.

According to the technical solution, the primary suspension device is disposed between the sidebeam and the shaft box, and the safety stopper device is disposed on the top of the primary suspension device. In a case where the sidebeam fails, the car body falls on the safety stopper device, and the safety stopper device is bearing with the weight load of the car body, thus protecting the normal operation of the shaft and improving the operation safety.

On the basis of the above technical solution, the embodiment specifically discloses the implementation mode of the bogie frame: the safety stopper device 5 has certain rigidity and can bear the weight load of the car body. For example, the safety stopper device 5 is made of a rigid material. Alternatively, the safety stopper device 5 may have a certain elastic cushioning capacity while having a certain stiffness, and can buffer vibration between the car body and the shaft box.

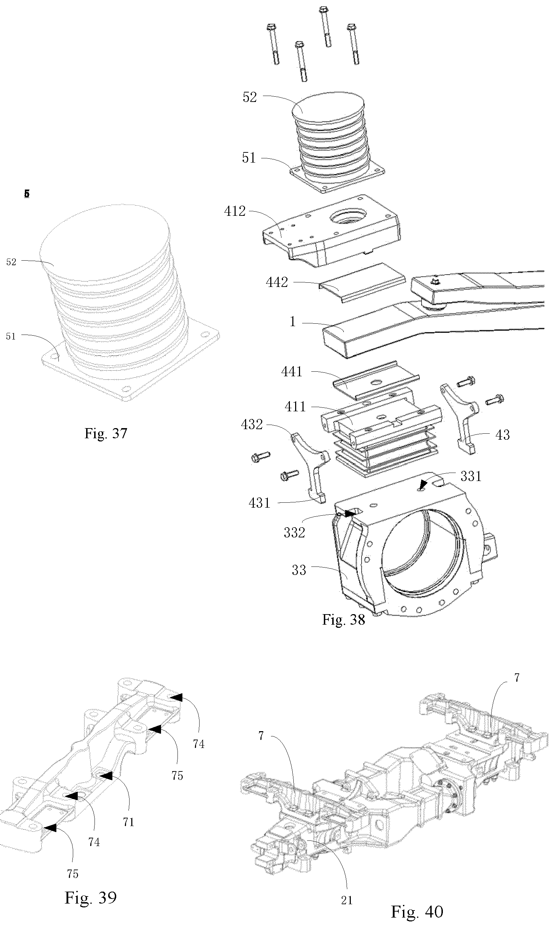

Fig. 36 is a sectional view of the bogie frame provided by the embodiment of the present disclosure with a safety stopper device, Fig. 37 is a structural schematic view of the safety stopper device provided by the embodiment of the present disclosure, and Fig. 38 is an explosive view of the assembly of the safety stopper device, the primary suspension device and the shaft box provided by the embodiment of the present disclosure. As shown in Figs. 36 to 38, in the present embodiment, the safety stopper device 5 includes a safety stopper seat 51 and a safety stopper 52. The safety stopper 52 is fixed to the safety stopper seat 51 mounted to the top of the primary suspension device 4. The safety stopper 52 has a certain elastic deformation capability, and the elastic deformation direction of the safety stopper 52 is extended in the vertical direction, i.e. has the same elastic deformation direction as the primary suspension device 4.

In another specific implementation, the safety stopper 52 includes a plurality of metal layers and a plurality of rubber layers disposed in a stack, and the rubber layer is disposed between two adjacent metal layers. The metal layer and the rubber layer form an integrated structure through the vulcanization process. The metal layer at the bottom is in contact with the safety stopper seat 51. The rubber layer has a certain elastic buffer capacity, and the metal layer has a certain stiffness to bear the weight load of the car body. The embodiment provides a concrete implementation mode of a primary suspension device 4. The primary suspension device 4 includes a primary suspension mounting seat 41 and a primary suspension 42. The primary suspension 42 is disposed on the top of the shaft box 33, and a primary positioning post is disposed on the bottom of the primary suspension 42, which is correspondingly inserted into the primary positioning hole 331 disposed on the top of the shaft box 33 for restricting the horizontal movement of the primary suspension 42.

The primary suspension mounting seat 41 is provided at the top of the primary suspension 42, and a safety stopper seat 51 in the safety stopper device 5 is mounted on the primary suspension mounting seat 42. A receiving space for receiving the end of the sidebeam 1 is provided in the primary suspension mounting seat 41, and the end of the sidebeam 1 penetrates into the receiving space.

In a specific implementation mode, the primary mounting seat 41 is formed by covering and connecting a lower mounting seat 411 with an upper mounting seat 412, and the receiving space is formed between the lower mounting seat 411 and the upper mounting seat 412. Specifically, the lower mounting seat 411 is made of a metal material and is vulcanized with rubber on the top of the primary suspension 42 to form an integral structure. The lower mounting seat 411 is fixedly connected to the upper mounting seat 412 by bolts.

In a specific implementation mode, bolt holes are provided corresponding to the safety stopper seat 51, the upper mounting seat 412 and the lower mounting seat 411, and bolts are passed through the safety stopper seat 51, the upper mounting seat 412, and the lower mounting seat 411 sequentially from top to fix the three seats.

The upper mounting seat 412 is provided with a weight reduction hole, which can reduce the weight of the primary suspension device 4, thereby reducing the dead weight of the bogie frame and improving the traction efficiency of the railway vehicle. The weight reduction hole is circular and provided on the upper mounting seat 412, and the center line is extended vertically. As shown in Figs. 11 and 38, the upper mounting seat 412 is fixedly connected to the primary fixing seat interface 10311a at end of the side chamber plate connecting rod 10311 of the first connecting frame by the chamber fixing bolts 1041 and the chamber fixing nuts 1042.

Further, a wheelset lift 43 is provided, the top end of which is connected to the primary suspension mounting seat 41 and the bottom end of which is connected to the shaft box 33, so as to restrict the vertical movement of the primary suspension 42 and prevent the primary suspension 42 from being separated from the shaft box 33 due to vertical movement.

In a specific implementation mode, the top of the shaft box 33 is planar, and two primary positioning holes 331 are disposed on the middle of the top of the shaft box 33 and disposed on intervals in the longitudinal direction. A limiting edge is extended in a direction perpendicular to the center line of the shaft box (i.e., the longitudinal direction), and a limiting recess 332 is formed on the limiting edge. The bottom end of the wheelset lift 43 is extended to two sides to form a limiting stopper protrusion 431. The wheelset lift 43 can be fitted in the limiting recess 332, and the limiting stopper protrusion 431 is restricted below the limiting edge. The limiting edge prevents the wheelset lift 43 from moving upward. Further, two connecting arms 432 are diverged upward from the middle portion of the wheelset lift 43 and are respectively connected to the end surfaces of the lower mounting seat 411.

The embodiment provides a specific implementation mode: the wheelset lift 43 has a "Y" shaped structure. In the assembly process, the middle portion of the wheelset lift 43 is inserted into the limiting recess 332, the two connecting arms 432 at the top of the wheelset lift 43 are respectively connected to the longitudinal end surface of the lower mounting seat 411 through bolts, and the limiting stopper protrusion 431 at the bottom is located below the limiting edge.

Each of the longitudinal ends of the lower mounting seat 411 is provided with a wheelset lift 43, and the longitudinal movement of the wheelset lift 43 is restricted by bolting to the wheelset lift 43, and the shaft box 33 restricts the vertical movement of the wheelset lift 43. With the above-mentioned embodiments, the vertical movement of the primary suspension 42 is restricted so as to avoid being separated from the shaft box 33 due to excessive movement. The wheelset lift 43 can also play an auxiliary lifting role during lifting the bogie frame. Specifically, during the hoisting process, the sidebeam moves upward, and the wheelset is driven to move upward by the primary suspension mounting seat and the wheelset lift 43.

The sidebeam 1 provided in the embodiment can be made of a composite material, such as a carbon fiber composite material, so that the sidebeam 1 has a certain flexibility and improves the adaptability to the car body load. On this basis, a lower pad plate 441 can be provided between the sidebeam 1 and the lower mounting seat 411, and two sides of the lower pad plate 441 are extended upwardly to the bottom surface higher than the end of the sidebeam 1 to cover the side surface of the sidebeam 1. The lower pad plate 441 can reduce the wear of the sidebeam 1. An upper pad plate 442 is provided between the sidebeam 1 and the upper mounting seat 412, and two sides of the upper pad plate 442 are extended downward to the top surface lower than the end of the sidebeam 1 and cover the side surface of the sidebeam 1. The upper pad plate 442 can reduce the wear of the sidebeam 1.

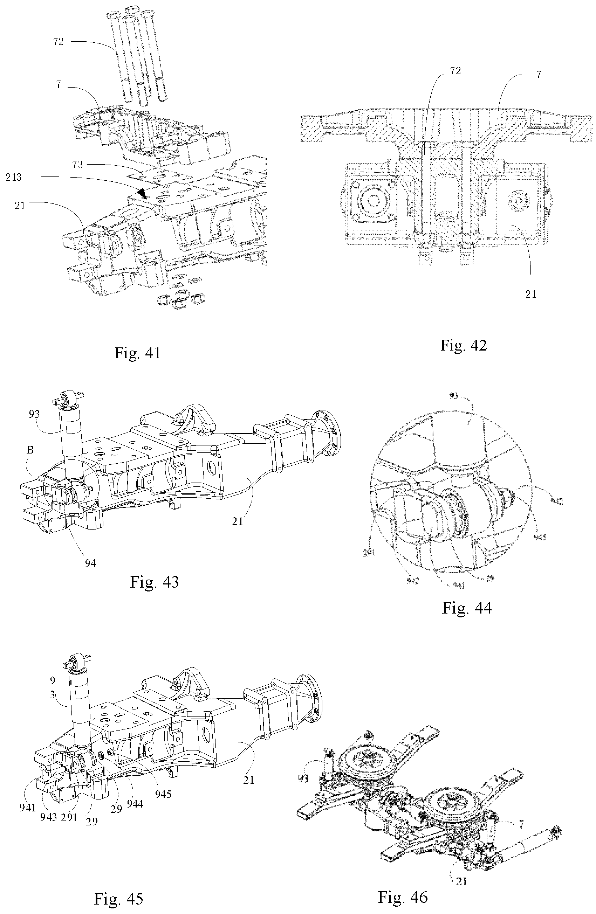

Fig. 39 is a perspective view of a brake hanging bracket of the bogie frame provided by the embodiment of the present disclosure. Fig. 40 is a schematic view of the connection between the brake hanging bracket and the crossbeam provided by the embodiment of the present disclosure. Fig. 41 is an exploded view of the connection between the brake hanging bracket and the crossbeam provided by the embodiment of the present disclosure. Fig. 42 is a sectional view of the brake hanging bracket and the crossbeam provided by the embodiment of the present disclosure. As shown in Figs. 17, 39 to 42, the crossbeam main body 21 is provided with a brake hanging bracket connecting interface for connecting with the brake hanging bracket 7.

One implementation mold is that the brake hanging bracket connecting interface is a brake bolt hole 213 provided in the crossbeam main body 21, and is connected to the brake hanging bracket 7 through a brake crossbeam connecting bolt 72.

The brake hanging bracket 7 includes a hanging bracket main body which is extended in the longitudinal direction and is located above the crossbeam. The brake crossbeam connecting holes 71 are provided in the middle portion of the hanging bracket main body. The number of brake crossbeam connecting holes 71 is four, which are symmetrically arranged on two sides of the hanging bracket main body and are respectively connected to brake bolt holes 213 on the crossbeam main body 21 through brake crossbeam connecting bolts 72. The brake hanging bracket 7 can be made of a rigid material or made of composite fiber material. In the embodiment, the brake hanging bracket 7 is made of carbon fiber material. A brake hanging bracket liner 73 is further provided between the brake hanging bracket 7 and the crossbeam main body 21, and a through hole through the brake hanging bracket liner 73 is correspondingly provided for passing the brake crossbeam connecting bolt 72. The brake hanging bracket liner 73 is employed to protect the brake hanging bracket 7 and reduce the wear thereof. Two ends of the brake hanging bracket 7 are provided with interfaces for connecting the brake device. Specifically, four brake device mounting holes 74 are provided at two ends of the brake hanging bracket 7, which are symmetrically arranged on two sides of the hanging bracket main body and connected to the brake device by bolts.

Further, the bogie frame is further provided with a bogie frame chamber surrounded on the outside of the main structure of the bogie frame, for protecting the bogie frame to avoid sundries on the railway hitting the bogie frame, also for noise reduction and airflow guidance. As shown in Figs. 12 and 39, two ends of the brake hanging bracket 7 are provided with interfaces for connecting to the bogie frame chamber, such as chamber mounting holes 75, to connect to the brake hanging bracket interface 10321a at end of the brake hanging bracket connecting rod 10321 of the second connecting frame of the bogie frame chamber by the chamber fixing bolts 1041 and the chamber fixing nuts 1042.

As shown in Fig. 17, the crossbeam main body 21 is further provided with a connecting interface for the vertical vibration damper, for example. vertical vibration damper mounting lugs 214 are provided on the side of the crossbeam main body 21.

Fig. 43 is a perspective schematic view of the connection between the crossbeam and the vertical vibration damper provided by the embodiment of the present disclosure. Fig. 44 is an enlarged schematic view of area B in Fig. 43. Fig. 45 is an exploded schematic view of the connection between the crossbeam and the vertical vibration damper provided by the embodiment of the present disclosure. Fig. 46 is a schematic view of the arranged position of the vertical vibration damper of the bogie frame provided by the embodiment of the present disclosure. As shown in Figs. 43 to 46, the end of the vertical vibration damper 93 is provided with bolt holes. The crossbeam 2 has mounting lugs 29 provided with mounting holes, and mounting lugs 29 further provided with a limiting surface 291 having at least a portion of a plane for abutting a first side plane 942 of a first bolt head 941.

The first fixing bolt 94 has the first screw 943 and the first bolt head 941 disposed at one end of the first screw 943. The first screw 943 is matched with the mounting hole and the bolt hole, and the first side plane 942 of the first bolt head 941 is abutted against the limiting surface 291.

The upper end of the vertical vibration damper 93 is connected to the car body of the railway vehicle. As shown in Figs. 44 and 45, the joint at the lower end of the vertical vibration damper 93 is provided with bolt holes. The bolt holes are provided through a direction perpendicular to the axial direction of the vertical vibration damper 93.

There can be two vertical vibration dampers 93, and the two vertical vibration dampers 93 are respectively provided on two sides of the longitudinal center line. Accordingly, the crossbeam 2 is provided with two vertical vibration damper interfaces for mounting two vertical vibration dampers 93 respectively. The crossbeam 2 is provided with two pairs of mounting lugs 29, each pair including two corresponding mounting lugs 29. One end of the vertical vibration damper 93 is disposed between two corresponding mounting lugs 29. The mounting lug 29 is provided on the side surface of the crossbeam main body 21 and is extended along the longitudinal direction of the car body.

The mounting lug 29 includes a head end and a tail end, and the head end of the mounting lug 29 is connected to the crossbeam main body 21 of the crossbeam 2. Of the two corresponding mounting lugs 29, the tail end of one mounting lug 29 is disposed inwardly with respect to the outer surface of the head end of the mounting lug 29 away from the outer surface of the other mounting lug, a connecting surface is connected between the outer surface of the head end and the outer surface of the tail end, and at least part of the connecting surface forms a limiting surface 291. In other words, the mounting lug 29 has a step-like structure. The mounting lug 29 has a first step surface and a second step surface, and a connecting surface connecting the first step surface and the second step surface at least partially forms the limiting surface 291.

The first screw 943 of the first fixing bolt 94 is provided through the bolt hole of the vertical vibration damper 93 and the mounting hole of the mounting lug 29. One end of the first screw 943 is provided with the first bolt head 941, the cross-sectional area of the first bolt head 941 is larger than the cross-sectional area of the first screw 943. The first bolt head 941 has at least one first side plane 942.

The head of the bolt includes four sides. Two facing sides are curved surfaces, and the other two facing sides are planes. At least part of the joint between the first end and the second end of the mounting lug 29 is plane, and the joint forms a limiting surface 291, which can face against one of the first side planes 942 of the first bolt head 941 to achieve the purpose of limiting and preventing loosening.

It is to be understood that the configuration of the first bolt head 941 is not limited thereto and the present embodiment is only exampled here. For example, the first bolt head 941 may also have a regular hexagonal structure, in which case the first bolt head 941 has six side planes. The limiting surface 291 of the crossbeam can abut one of the six side planes of the first bolt head 941.

In this example, the limiting surface 291 of the mounting lug 29 can come into face-to-face contact with the first side plane 942 of the first bolt head 941 of the first fixing bolt 94, thereby forming a loosening prevention structure for the first fixing bolt 94. Thus, in a case where the first fixing bolt 94 is impacted and has a tendency to rotate, the limiting surface 291 of the mounting lug 29 can counteract the impact force driving the first fixing bolt 94 to rotate by applying a force on the first side plane 942 of the first bolt head 941, thereby preventing the first fixing bolt 94 from loosening and ensuring the reliability of the connection between the crossbeam and the vertical vibration damper 93.

In one implementation, the first fixing bolt 94 further includes a first nut 945 matched with the first screw 943. The first nut 945 is positioned at one end of the first screw 943 away from the first bolt head 941. The bogie frame further includes a first adjusting gasket 944 positioned between the first nut 945 and the corresponding mounting lug 29. The number of the first adjusting gaskets 944 is adjustable and the number of the first adjusting gaskets 944 can be designed according to actual needs.

In this example, by adjusting the number of the first adjusting gaskets 944, the spacing between the ends of the first nut 945 and the corresponding mounting lugs 29 can be adjusted, further facilitating the improvement of the connection reliability between the vertical vibration damper 93 and the traction center pin.

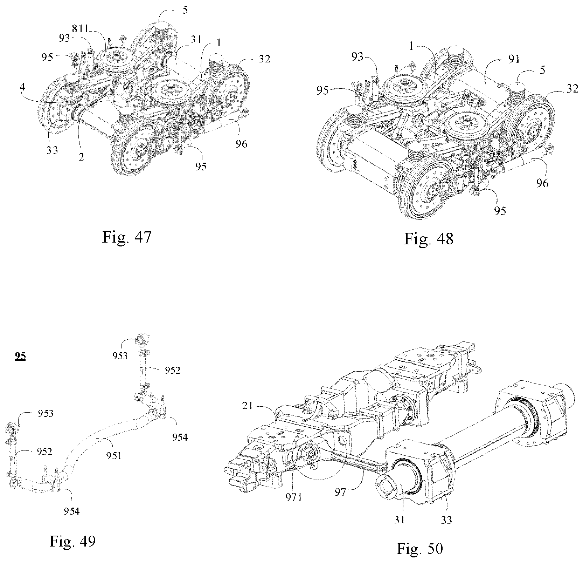

Fig. 46 is a perspective view of the non-powered bogie frame provided by the embodiment of the present disclosure. Fig. 48 is a perspective view of the powered bogie frame provided by the embodiment of the present disclosure. As shown in Figs. 46 and 48, the bogie frame provided by the embodiment can be a non-powered bogie frame. If a traction motor is disposed on the wheelset, the bogie frame is a powered bogie frame, and the traction motor can be a direct driver, the rotor of which directly drives the shaft to rotate.

The crossbeam in the embodiment further provides a connecting interface for other components. As shown in Figs. 17, 47, and 48, the crossbeam main body 21 is further provided with a connecting interface for anti-roll torsion bars. For example, an anti-roll torsion bar mounting portion 215 is provided on the side surface of the crossbeam main body 21. Fig. 49 is a perspective view of an anti-roll torsion bar provided by the embodiment of the present disclosure. As shown in Fig. 49, the anti-roll torsion bar 101 includes a transverse torsion bar 951 and a vertical torsion bar 952 connected at two ends of the transverse torsion bar 951.

The transverse torsion bar 951 is horizontally arranged and extended in the transverse direction. Two ends of the transverse torsion bar 951 are bent and extended outwardly in the longitudinal direction. The vertical torsion bar 952 is extended in the vertical direction and the bottom end of which is connected to the transverse torsion bar 951 through a torsion bar joint 953. The top end of the vertical torsion bar 952 is connected to the car body through the torsion bar joint 953.

The anti-roll torsion bar 95 is connected to the crossbeam by a torsion bar mounting member 954 and specifically to the anti-roll torsion bar mounting portion 215 by bolts. The torsion bar mounting member 954 includes an upper mounting member body with an upper concave arc groove at the bottom and a lower mounting member body with a lower concave arc groove at the top. The upper mounting member body is coupled with the lower mounting member body, and the upper concave arc groove is coupled with the lower concave arc groove to form a circular hole passed through with the transverse torsion bar 951. The upper mounting member body and the lower mounting member body are connected together by bolts and are connected to the anti-roll torsion bar mounting portion 215.

Fig. 47 is a perspective view of a non-powered bogie frame provided by the embodiment of the present disclosure. Fig. 48 is a perspective view of a powered bogie frame provided by the embodiment of the present disclosure. As shown in Figs. 17 and 47, 48, the crossbeam further provides an interface for connecting the anti-yaw damper 96, specifically an anti-yaw damper mounting plate 216 provided at the outer end of the crossbeam main body 21, specifically including two horizontal mounting plates arranged upper and lower, and the longitudinal end surfaces of the horizontal mounting plate are provided with bolt holes for connecting with the anti-yaw damper 96 by elastic joints.

Fig. 50 is a structural schematic view of the crossbeam connected to the shaft box through a tension-only rod provided by the embodiment of the present disclosure. As shown in Figs. 17 and 50, the crossbeam further provides a connecting interface for a tension-only rod 97 connected between the crossbeam and the shaft box 33 for transmitting a longitudinal force between the crossbeam 2 and the shaft box 33. Specifically, the crossbeam main body 21 is provided with a tension-only rod connecting portion 217, and one end of the tension-only rod 97 is provided with a rod joint 971, which is connected to the tension-only rod connecting portion 217 by bolts. The other end of the tension-only rod 97 is provided with a rod joint 971, which is connected to the shaft box 33 by bolts. The rod joint 971 is an elastic joint, which is vulcanized from metal and rubber, and can cushion the buffer force between the tension-only rod, the crossbeam, and the shaft box, and can better adapt to the longitudinal and transverse pulling forces.

Further, as shown in Fig. 17, a nameplate mounting portion 219 is provided on the crossbeam main body 21 for mounting a bogie frame nameplate. The nameplate mounting portion 219 is an inclined plane, and the four corners of the nameplate mounting portion 219 are provided with screw holes for fixing the bogie frame nameplate to the crossbeam 2 by screws.

On the basis of the above technical proposal, the crossbeam main body 21 is further provided with a center pin connecting portion 218 for matching with the traction center pin. As shown in Figs. 47 and 48, the top end of the traction center pin is connected to the car body and the bottom end is connected to the crossbeam 2, and the traction center pin is employed to transmit longitudinal traction or braking force between the car body and the bogie frame.

Further, the top surface of the crossbeam main body 21 is provided with a brake device interface to connected to the brake device. Specifically, the top surface of the crossbeam main body 21 is provided with a brake mounting platform protruded from the top surface of the crossbeam main body 21, and the brake mounting platform is provided with a bolt hole for connecting with the brake device as a brake device interface.

In a specific implementation mode, the brake mounting platform and the secondary mounting platform 212 are integrated, and a brake bolt hole 213 is disposed on the brake mounting platform to connect with the brake hanging bracket in the brake device.

Further, a vertical vibration damper mounting portion to connect with the vertical vibration damper is provided on the side of the crossbeam main body 21. Specifically, the vertical vibration damper mounting portion includes two vertical vibration damper mounting lugs 214 disposed in parallel and protruded from the side of the crossbeam main body 21, on which mounting holes are provided, and the vertical vibration damper is extended in the vertical direction. The bottom of the vertical vibration damper is connected to the mounting holes of the two vertical vibration damper mounting lugs 214 by bolts, and the top of the vertical vibration damper is connected to the car body.

Further, the bottom surface of the crossbeam main body 21 is provided with an anti-roll torsion bar mounting portion 215 to connect with the anti-roll torsion bar. Specifically the anti-roll torsion bar mounting portion is provided at the bottom of the crossbeam main body 21 and is extended in the longitudinal direction with two ends extended to the side protruding from the crossbeam main body 21. The end of the anti-roll torsion bar mounting portion is provided with a vertically extending mounting hole to connect with the anti-roll torsion bar.

Further, the outer end of the crossbeam main body 21 away from the other crossbeam single-structure 2 is provided with an anti-yaw damper mounting portion to connect with the anti-yaw damper. Specifically, the anti-yaw damper mounting portion includes two anti-yaw damper mounting plates 216 protruded in the transverse direction from the end of the crossbeam main body 21, and the two anti-yaw damper mounting plates extended in the horizontal direction and are disposed in alignment upper and lower. The coaxial mounting holes are provided on the two anti-yaw damper mounting plates to connect with the anti-yaw dampers.

Further, the side of the crossbeam main body 21 is provided with a tension-only rod connecting portion 217 to connect with the tension-only rod, on which a mounting hole is provided to connect with one end of the tension-only rod by bolts, and the other end of the tension-only rod is connected to the shaft box in the wheelset to transmit traction or braking force between the crossbeam and the wheelset.

As shown in Figs. 13 and 16, the bottom surface of the crossbeam main body 21 is further provided with a second connecting frame mounting portion 21a. The crossbeam connecting interfaces 10322a of the back and forth crossbeam connecting rods 10322 of the two second connecting frames and the second connecting frame mounting portions 21a are fixedly connected by the chamber fixing bolt 1041, the chamber gasket 1043 and the chamber fixing nut 1042, so as to have fixed connection between the second connecting frame and the crossbeam main body 21.

The top surface of the crossbeam main body 21 is further provided with a nameplate mounting portion 219 to mount a bogie frame nameplate. The nameplate mounting portion 219 has a flat surface and is provided at the outer end of the secondary mounting platform 212.

The crossbeam provided by the embodiment provides interfaces for a plurality of components, integrates the arrangement of a plurality of components, and has a high degree of integration. Compared with the conventional bogie frame, a large number of components such as mounting seats are omitted, the number of components is reduced, the processing workload is reduced, and the production cost is reduced.

### Embodiment 3

A railway vehicle according to the embodiment of the present disclosure includes the bogie frame system according to Embodiments 1 and 2.

## Claims

1. A bogie frame system of a railway vehicle, comprising: a bogie frame (101) and a bogie frame chamber (102) comprising a chamber body assembly comprising:
a main chamber plate (1021); and
two side chamber plates (1022), fixed with two sides of the main chamber plate (1021), and forming a recessed cavity with the main chamber plate (1021) for receiving the bogie frame of the railway vehicle;
wherein an inner side of the main chamber plate (1021) is fixed with a front or rear of the bogie frame (101) to separate the front or rear of the bogie frame (101) from an outside and inner sides of the two side chamber plates (1022) are fixed with sides of the bogie frame (101) to separate the sides of the bogie frame (101) from the outside;
**characterized in that**,
the bogie frame chamber (102) further comprises: a first connecting frame (1031) comprising:
a side chamber plate connecting rod (10311), wherein one end of the side chamber plate connecting rod (10311) is connected to the inner side of the side chamber plate (1022) by a rubber joint, and the other end of the side chamber plate connecting rod (10311) is provided with a primary fixing seat interface (10311a); and
a main chamber plate connecting rod (10312), wherein one end of the main chamber plate connecting rod (10312) is connected to the inner side of the main chamber plate (1021) by a rubber joint, and the other end of the main chamber plate connecting rod (10312) is fixed with the side chamber plate connecting rod (10311);
wherein the primary fixing seat interface (10311a) of the side chamber connecting rod (10311) is employed to connect with the primary spring fixing seat of the bogie frame (101);
the side chamber plate connecting rod (10311) is higher than the main chamber plate connecting rod (10312); and
the first connecting frame (1031) further includes a first connecting frame reinforcing rod (10313), one end of which is fixed with the side chamber connecting rod (10311), and the other end of which is fixed with the main chamber plate connecting rod (10312), to reinforce the strength of the first connecting frame (1031).

2. The bogie frame system according to claim 1, wherein when the main chamber plate (1021) is fixed with the bogie frame (101), the main chamber plate (1021) covers inner edges of two sidebeams of the bogie frame (101) in the width direction and components located between the two sidebeams of the bogie frame (101) in the height direction;
in case where the side chamber plate (1022) is fixed with the bogie frame (101), the side chamber plate (1022) covers the sidebeams of the bogie frame (101) and the side of the bogie frame (101) in the width direction, upwardly covers the upper surface of the sidebeams of the bogie frame (101) in the height direction, and downwardly covers components mounted on the sidebeams of the bogie frame (101) in the height direction;
the main chamber plate (1021) has a streamlined outer surface and the side chamber plates (1022) have a streamlined outer surface;
the outer surface of the main chamber plate (1021) and the outer surface of the side chamber plate (1022) are employed to guide airflow flowing along the outer surface of the bogie frame chamber (102) and to reduce airflow entering into the bogie frame chamber (102).

3. The bogie frame system according to claim 2, wherein when the side chamber plate (1022) is fixed with the bogie frame (101), the side chamber plate (1022) covers a brake unit of the bogie frame (101) on the side of the side chamber plate (1022) away from the main chamber plate (1021) when fixed with the bogie frame (101);
the side chamber plate (1022) guides an airflow entering the upper and/or lower ends of the main chamber plate (1021) to the brake unit of the bogie frame (101) to cool down the brake unit;
the bogie frame chamber (102) further includes a sound-absorbing plate (1023); the inside of the main chamber plate (1021) is fixed with the sound-absorbing plate, and/or the inside of the side chamber plate (1022) is fixed with the sound-absorbing plate (1023).

4. The bogie frame system according to any one of claims 1-3, further comprising: a second connecting frame (1032) comprising:
a brake hanging bracket connecting rod (10321), wherein one end of the brake hanging bracket connecting rod (10321) is connected to the position of the inner side of the side chamber plate (1022) away from the main chamber plate (1021) by a rubber joint, and the other end is provided with a brake hanging bracket interface (10321a);
wherein the brake hanging bracket interface (10321a) of the brake hanging bracket connecting rod (10321) is employed to connect with the brake unit hanging bracket of the bogie frame (101);
the second connecting frame (1032) further comprises:
a crossbeam connecting rod (10322), wherein one end of the crossbeam connecting rod (10322) is connected to the position of the inner side of the side chamber plate (1022) away from the main chamber plate (1021) by a rubber joint, and the other end is provided with a crossbeam interface (10322a); wherein the crossbeam connecting rod (10322) is disposed below the brake hanging bracket connecting rod (10321);
wherein the crossbeam interface (10322a) of the crossbeam connecting rod (10322) is connected with the crossbeam of the bogie frame (101);
the second connecting frame (1032) further comprises:
a second connecting frame reinforcing rod (10323), wherein one end of the second connecting frame reinforcing rod (10323) is fixed with the brake hanging bracket connecting rod (10321), and the other end is fixed with the crossbeam connecting rod (10322);
wherein the second connecting frame reinforcing rods (10323) are two and disposed in parallel.

5. The bogie frame system according to claim 4, wherein the chamber body assembly is two, the crossbeam interfaces (10322a) of the two crossbeam connecting rods (10322) are connected, and the connection is employed to connect with the crossbeam of the bogie frame (101).

6. The bogie frame system according to any one of claims 1-5, wherein two sides of the main chamber plate (1021) are respectively provided with main chamber plate through holes (10211);
the side of the side chamber plate (1022) near the main chamber plate (1021) has a step hole-shaped side chamber plate through hole (10221), and a larger diameter section of the side chamber plate through hole (10221) is away from the main chamber plate (1021) and a hole wall of the side chamber plate through hole (10221) is an anti-rotation polygon structure;
one end of a screw of a first anti-rotation bolt (1024) near the head is formed with a first anti-rotation platform (10241) in the shape of a straight prism; and
the screw of the first anti-rotation bolt (1024) passes through the side chamber plate through hole (10221) and the main chamber plate through hole (10211), and the first anti-rotation platform (10241) is snapped into a section with a larger diameter of the side chamber plate through hole (10221), and is matched with a first nut (10251) to fix the main chamber plate (1021) and the side chamber plate (1022).

7. The bogie frame system according to claim 6, wherein the main chamber plate (1021) comprises a main chamber plate mounting seat, and the main chamber plate mounting seat comprises:
a main chamber plate mounting seat body (10212), formed on two sides of the main chamber plate (1021);
an anti-rotation seat (1026), fixed with the main chamber plate mounting seat body (10212); wherein the anti-rotation seat (1026) is provided with two anti-rotation protruding bars (10261) arranged facing to each other, the main chamber plate through hole (10211) is arranged between the two anti-rotation protruding bars (10261) and penetrates the main chamber plate mounting seat body (10212) and the anti-rotation seat (1026), and the middle of the anti-rotation protruding bars (10261) is provided with an anti-rotation recess (10262); and
a first anti-rotation flexible strip (1027), wherein the anti-rotation flexible strip (1027) is provided with a circular through hole;
wherein the screw of the first anti-rotation bolt (1024) further passes through the circular through hole of the first anti-rotation flexible strip (1027), the first nuts (10251) are respectively pressed on the two sides of the first anti-rotation flexible strip (1027), and the two ends of the first anti-rotation flexible strip (1027) are respectively snapped into the anti-rotation recess (10262).

8. The bogie frame system according to claim 7, wherein the main chamber plate through hole (10211) has an elongated structure.

9. The bogie frame system according to claim 8, wherein a plurality of main chamber plate mounting seats are disposed at intervals from top to bottom on two sides of the main chamber plate (1021); and
the number of anti-rotation seats (1026), the first anti-rotation flexible strips (1027), and the side chamber plate through holes (10221) are matched with the number of main chamber plate mounting seats.

10. The bogie frame system according to claim 9, further comprising: an anti-rotation mounting structure comprising:
an anti-rotation protruding seat (10222), formed on the inner side of a chamber plate, wherein the anti-rotation protruding seat (10222) is provided with a step hole, the hole wall of a section with larger diameter in the step hole of the anti-rotation protruding seat (10222) is an anti-rotation polygon structure, and the chamber plate includes a main chamber plate (1021) and a side chamber plate (1022); and
an anti-rotation indenting seat (1033), provided with a through hole, wherein the anti-rotation indenting seat (1033) is fastened on the anti-rotation protruding seat (10222);
a second anti-rotation bolt (1034), wherein a straight prism-shaped second anti-rotation platform (10341) is formed at one end of the screw rod of the second anti-rotation bolt (1034) near the head;
wherein a screw of the second anti-rotation bolt (1034) passes through the step hole of the anti-rotation protruding seat (10222) and the through hole of the anti-rotation indenting seat (1033), and the second anti-rotation platform (10341) is snapped into a section with a larger diameter in the step hole of the anti-rotation protruding seat (10222), and is matched with a second nut (10351) to fix the anti-rotation protruding seat (10222) and the chamber plate.

11. The bogie frame system according to claim 10, wherein two anti-rotation grooves are symmetrically disposed on a side of the anti-rotation indenting seat (1033) away from the anti-rotation protruding seat (10222);
the second connecting frame (1032) further comprises: a second anti-rotation flexible strip (1036), wherein the second anti-rotation flexible strip (1036) is provided with a circular through hole;
wherein a screw of the second anti-rotation bolt (1034) further passes through the circular through hole of the second anti-rotation flexible strip (1036), the second nuts (10351) are respectively pressed on two sides of the second anti-rotation flexible strip (1036), and the second anti-rotation flexible strip (1036) is snapped into the anti-rotation grooves.

12. The bogie frame system according to claim 11, wherein the through hole of the anti-rotation indenting seat (1033) is an elongated through hole.

13. The bogie frame system according to claim 12, wherein the anti-rotation mounting structure is provided at positions where the side chamber plate (1022) is connected to the side chamber connecting rod (10311) of the first connecting frame (1031), where the side chamber plate (1022) is connected to the brake hanging bracket connecting rod (10321) of the second connecting frame (1032), and where the side chamber plate (1022) is connected to the crossbeam connecting rod (10322) of the second connecting frame (1032); and
the side chamber connecting rod (10311), the brake hanging bracket connecting rod (10321), and the crossbeam connecting rod (10322) are respectively connected at the anti-rotation mounting structure at the respective positions.

14. A railway vehicle, **characterized in that**, comprising the bogie frame system of any one of claims 1 to 13.

## Patentansprüche

1. Drehgestellrahmensystem für ein Schienenfahrzeug, das aufweist: einen Drehgestellrahmen (101) und eine Drehgestellrahmenkammer (102), die eine Kammerkörperbaugruppe aufweist, die aufweist:
eine Hauptkammerplatte (1021); und
zwei Seitenkammerplatten (1022), die an beiden Seiten der Hauptkammerplatte (1021) befestigt sind und zusammen mit der Hauptkammerplatte (1021) einen vertieften Hohlraum zur Aufnahme des Drehgestellrahmens des Schienenfahrzeugs bilden;
wobei eine Innenseite der Hauptkammerplatte (1021) an einer Vorder- oder Rückseite des Drehgestellrahmens (101) befestigt ist, um die Vorder- oder Rückseite des Drehgestellrahmens (101) von einer Außenseite zu trennen und die Innenseiten der beiden Seitenkammerplatten (1022) an den Seiten des Drehgestellrahmens (101) befestigt sind, um die Seiten des Drehgestellrahmens (101) von der Außenseite zu trennen;
**dadurch gekennzeichnet, dass**
die Drehgestellrahmenkammer (102) ferner aufweist: einen ersten Verbindungsrahmen (1031), der aufweist:
eine Seitenkammerplatten-Verbindungsstange (10311), wobei ein Ende der Seitenkammerplatten-Verbindungsstange (10311) über ein Gummigelenk mit der Innenseite der Seitenkammerplatte (1022) verbunden ist und das andere Ende der Seitenkammerplatten-Verbindungsstange (10311) mit einer primären Befestigungssitzschnittstelle (10311a) versehen ist; und
eine Hauptkammerplatten-Verbindungsstange (10312), wobei ein Ende der Hauptkammerplatten-Verbindungsstange (10312) über ein Gummigelenk mit der Innenseite der Hauptkammerplatte (1021) verbunden ist und das andere Ende der Hauptkammerplatten-Verbindungsstange (10312) an der Seitenkammerplatten-Verbindungsstange (10311) befestigt ist;
wobei die primäre Befestigungssitzschnittstelle (10311a) der Seitenkammer-Verbindungsstange (10311) dazu dient, eine Verbindung mit dem primären Federbefestigungssitz des Drehgestellrahmens (101) herzustellen;
die Seitenkammerplatten-Verbindungsstange (10311) höher liegt als die Hauptkammerplatten-Verbindungsstange (10312); und
der erste Verbindungsrahmen (1031) ferner eine erste Verbindungsrahmen-Verstärkungsstange (10313) aufweist, deren eines Ende an der Seitenkammer-Verbindungsstange (10311) befestigt ist, und deren anderes Ende an der Hauptkammerplatten-Verbindungsstange (10312) befestigt ist, um die Festigkeit des ersten Verbindungsrahmens (1031) zu verstärken.

2. Drehgestellrahmensystem nach Anspruch 1, wobei, wenn die Hauptkammerplatte (1021) am Drehgestellrahmen (101) befestigt ist, die Hauptkammerplatte (1021) Innenkanten der beiden Längsträger des Drehgestellrahmens (101) in Breitenrichtung sowie die zwischen den beiden Längsträgern des Drehgestellrahmens (101) in Höhenrichtung liegenden Bauteile abdeckt;
in dem Fall, dass die Seitenkammerplatte (1022) am Drehgestellrahmen (101) befestigt ist, bedeckt die Seitenkammerplatte (1022) die Längsträger des Drehgestellrahmens (101) und die Seite des Drehgestellrahmens (101) in Breitenrichtung, bedeckt nach oben hin die Oberseite der Längsträger des Drehgestellrahmens (101) in Höhenrichtung, und deckt nach unten hin die an den Längsträgern des Drehgestellrahmens (101) montierten Bauteile in Höhenrichtung; oder
die Hauptkammerplatte (1021) weist eine stromlinienförmige Außenfläche auf, und die Seitenkammerplatten (1022) weisen eine stromlinienförmige Außenfläche auf;
die Außenfläche der Hauptkammerplatte (1021) und die Außenfläche der Seitenkammerplatte (1022) dienen dazu, den entlang der Außenfläche der Drehgestellrahmenkammer (102) strömenden Luftstrom zu lenken und den in die Drehgestellrahmenkammer (102) eintretenden Luftstrom zu verringern.

3. Drehgestellrahmensystem nach Anspruch 2, wobei, wenn die Seitenkammerplatte (1022) am Drehgestellrahmen (101) befestigt ist, die Seitenkammerplatte (1022) eine Bremseinheit des Drehgestellrahmens (101) auf der von der Hauptkammerplatte (1021) abgewandten Seite der Seitenkammerplatte (1022) bedeckt, wenn sie am Drehgestellrahmen (101) befestigt ist;
die Seitenkammerplatte (1022) lenkt einen Luftstrom, der in das obere und/oder untere Ende der Hauptkammerplatte (1021) eintritt, zur Bremseinheit des Drehgestellrahmens (101), um die Bremseinheit zu kühlen; oder
die Drehgestellrahmenkammer (102) weist ferner eine schallabsorbierende Platte (1023) auf; das Innere der Hauptkammerplatte (1021) ist an der schallabsorbierenden Platte befestigt und/oder das Innere der Seitenkammerplatte (1022) ist an der schallabsorbierenden Platte befestigt.

4. Drehgestellrahmensystem nach einem der Ansprüche 1-3, das ferner aufweist: einen zweiten Verbindungsrahmen (1032), der aufweist:
eine Bremsaufhängungsbügel-Verbindungsstange (10321), wobei ein Ende der Bremsaufhängungsbügel-Verbindungsstange (10321) über ein Gummigelenk mit der von der Hauptkammerplatte (1021) abgewandten Position der Innenseite der Seitenkammerplatte (1022) verbunden ist, und das andere Ende mit einer Bremsaufhängungsbügel-Schnittstelle (10321a) versehen ist;
wobei die Bremsaufhängungsbügel-Schnittstelle (10321a) der Bremsaufhängungsbügel-Verbindungsstange (10321) dazu dient, eine Verbindung mit dem Bremseinheit-Aufhängungsbügel des Drehgestellrahmens (101) herzustellen;
wobei der zweite Verbindungsrahmen (1032) ferner aufweist:
eine Querträger-Verbindungsstange (10322), wobei ein Ende der Querträger-Verbindungsstange (10322) über ein Gummigelenk mit der von der Hauptkammerplatte (1021) abgewandten Position der Innenseite der Seitenkammerplatten (1022) verbunden ist und das andere Ende mit einer Querträgerschnittstelle (10322a) versehen ist, wobei die Querträger-Verbindungsstange (10322) unterhalb der Bremsaufhängungsbügel-Verbindungsstange (10321) angeordnet ist;
wobei die Querträgerschnittstelle (10322a) der Querträger-Verbindungsstange (10322) mit dem Querträger des Drehgestellrahmens (101) verbunden ist;
wobei der zweite Verbindungsrahmen (1032) ferner aufweist:
eine zweite Verbindungsrahmen-Verstärkungsstange (10323), wobei ein Ende der zweiten Verbindungsrahmen-Verstärkungsstange (10323) an der Bremsaufhängungsbügel-Verbindungsstange (10321) befestigt ist und das andere Ende an der Querträger-Verbindungsstange (10322) befestigt ist;
wobei die zweiten Verbindungsrahmen-Verstärkungsstangen (10323) in einer Anzahl von zwei vorhanden sind und parallel zueinander angeordnet sind.

5. Drehgestellrahmensystem nach Anspruch 4, wobei die Kammerkörperbaugruppe in einer Anzahl von zwei vorhanden ist, die Querträgerschnittstellen (10322a) der beiden Querträger-Verbindungsstangen (10322) miteinander verbunden sind, und die Verbindung zur Anbindung an den Querträger des Drehgestellrahmens (101) dient.

6. Drehgestellrahmensystem nach einem der Ansprüche 1-5, wobei zwei Seiten der Hauptkammerplatte (1021) jeweils mit Hauptkammerplatten-Durchgangslöchern (10211) versehen sind;
die Seite der Seitenkammerplatte (1022) in der Nähe der Hauptkammerplatte (1021) eine Seitenkammerplatten-Durchgangsbohrung (10221) in Form einer Stufenbohrung aufweist, und ein Abschnitt der Seitenkammerplatten-Durchgangsbohrung (10221) mit größerem Durchmesser von der Hauptkammerplatte (1021) abgewandt ist und eine Bohrungswand der Seitenkammerplatten-Durchgangsbohrung (10221) eine Verdrehsicherungs-Polygonstruktur aufweist;
an einem Ende einer Schraube eines ersten Verdrehsicherungsbolzens (1024) in der Nähe des Kopfes eine erste Verdrehsicherungsplattform (10241) in Form eines geraden Prismas ausgebildet ist; und
die Schraube des ersten Verdrehsicherungsbolzens (1024) durch die Seitenkammerplatten-Durchgangsbohrung (10221) und die Hauptkammerplatten-Durchgangsbohrung (10211) verläuft, und die erste Verdrehsicherungsplattform (10241) in einen Abschnitt mit größerem Durchmesser der Seitenkammerplatten-Durchgangsbohrung (10221) einrastet und mit einer ersten Mutter (10251) in Eingriff gebracht wird, um die Hauptkammerplatte (1021) und die Seitenkammerplatte (1022) zu befestigen.

7. Drehgestellrahmensystem nach Anspruch 6, wobei die Hauptkammerplatte (1021) einen Hauptkammerplatten-Montagesitz aufweist und der Hauptkammerplatten-Montagesitz aufweist:
einen Hauptkammerplatten-Montagesitzkörper (10212), der auf beiden Seiten der Hauptkammerplatte (1021) ausgebildet ist;
einen Verdrehsicherungssitz (1026), der am Hauptkammerplatten-Montagesitzkörper (10212) befestigt ist; wobei der Verdrehsicherungssitz (1026) mit zwei einander zugewandt angeordneten Verdrehsicherungsvorsprungsstäben (10261) versehen ist, wobei die Hauptkammerplatten-Durchgangsbohrung (10211) zwischen den beiden Verdrehsicherungsvorsprungsstäben (10261) angeordnet ist und den Hauptkammerplatten-Montagesitzkörper (10212) sowie den Verdrehsicherungssitz (1026) durchdringt, und die Mitte der Verdrehsicherungsvorsprungsstäbe (10261) mit einer Verdrehsicherungsaussparung (10262) versehen ist; und
einen ersten flexiblen Verdrehsicherungsstreifen (1027), wobei der erste flexible Verdrehsicherungsstreifen (1027) mit einer kreisförmigen Durchgangsbohrung versehen ist;
wobei die Schraube des ersten Verdrehsicherungsbolzens (1024) ferner durch die kreisförmige Durchgangsbohrung des ersten flexiblen Verdrehsicherungsstreifens (1027) verläuft, die ersten Muttern (10251) jeweils auf die beiden Seiten des ersten flexiblen Verdrehsicherungsstreifens (1027) gedrückt werden und die beiden Enden des ersten flexiblen Verdrehsicherungsstreifens (1027) jeweils in die Verdrehsicherungsaussparung (10262) einrasten.

8. Drehgestellrahmensystem nach Anspruch 7, wobei die Hauptkammerplatten-Durchgangsbohrung (10211) eine längliche Struktur aufweist.

9. Drehgestellrahmensystem nach Anspruch 8, wobei eine Vielzahl von Hauptkammerplatten-Montagesitzen in Abständen von oben nach unten auf beiden Seiten der Hauptkammerplatte (1021) angeordnet sind; und
die Anzahl der Verdrehsicherungssitze (1026), der ersten flexiblen Verdrehsicherungsstreifen (1027) und der Seitenkammerplatten-Durchgangslöcher (10221) mit der Anzahl der Hauptkammerplatten-Montagesitze übereinstimmt.

10. Drehgestellrahmensystem nach Anspruch 9, das ferner aufweist: eine Verdrehsicherungsmontagestruktur, die aufweist:
einen Verdrehsicherungsvorsprungssitz (10222), der an der Innenseite einer Kammerplatte ausgebildet ist, wobei der Verdrehsicherungsvorsprungssitz (10222) mit einer Stufenbohrung versehen ist, die Bohrungswand eines Abschnitts mit größerem Durchmesser in der Stufenbohrung des Verdrehsicherungsvorsprungssitzes (10222) eine Verdrehsicherungs-Polygonstruktur ist und die Kammerplatte eine Hauptkammerplatte (1021) und eine Seitenkammerplatte (1022) aufweist; und
einen Verdrehsicherungseindrücksitz (1033), der mit einer Durchgangsbohrung versehen ist, wobei der Verdrehsicherungseindrücksitz (1033) an dem Verdrehsicherungsvorsprungssitz (10222) befestigt ist;
einen zweite Verdrehsicherungsbolzen (1034), wobei eine gerade, prismenförmige zweite Verdrehsicherungsplattform (10341) an einem Ende der Schraubstange des zweiten Verdrehsicherungsbolzens (1034) in der Nähe des Kopfes ausgebildet ist;
wobei eine Schraube des zweiten Verdrehsicherungsbolzens (1034) durch die Stufenbohrung des Verdrehsicherungsvorsprungssitzes (10222) und die Durchgangsbohrung des Verdrehsicherungseindrücksitzes (1033) verläuft, und die zweite Verdrehsicherungsplattform (10341) in einen Abschnitt mit größerem Durchmesser in der Stufenbohrung des Verdrehsicherungsvorsprungssitzes (10222) einrastet und mit einer zweiten Mutter (10351) in Eingriff gebracht wird, um den Verdrehsicherungsvorsprungssitz (10222) und die Kammerplatte zu befestigen.

11. Drehgestellrahmensystem nach Anspruch 10, wobei zwei Verdrehsicherungsnuten symmetrisch auf einer Seite des Verdrehsicherungseindrücksitzes (1033) angeordnet sind, die vom Verdrehsicherungsvorsprungssitz (10222) abgewandt ist;
wobei der zweite Verbindungsrahmen (1032) ferner aufweist: einen zweiten flexiblen Verdrehsicherungsstreifen (1036), wobei der zweite flexible Verdrehsicherungsstreifen (1036) mit einer kreisförmigen Durchgangsbohrung versehen ist;
wobei eine Schraube des zweiten Verdrehsicherungsbolzens (1034) ferner durch die kreisförmige Durchgangsbohrung des zweiten flexiblen Verdrehsicherungsstreifens (1036) verläuft, die zweiten Muttern (10351) jeweils auf die beiden Seiten des zweiten flexiblen Verdrehsicherungsstreifens (1036) gedrückt werden, und der zweite flexible Verdrehsicherungsstreifen (1036) in die Verdrehsicherungsnuten einrastet.

12. Drehgestellrahmensystem nach Anspruch 11, wobei die Durchgangsbohrung des Verdrehsicherungseindrücksitzes (1033) eine längliche Durchgangsbohrung ist.

13. Drehgestellrahmensystem nach Anspruch 12, wobei die Verdrehsicherungsmontagestruktur an Positionen vorgesehen ist, an denen die Seitenkammerplatte (1022) mit der Seitenkammer-Verbindungsstange (10311) des ersten Verbindungsrahmens (1031) verbunden ist, an denen die Seitenkammerplatte (1022) mit der Bremsaufhängungsbügel-Verbindungsstange (10321) des zweiten Verbindungsrahmens (1032) verbunden ist, und an denen die Seitenkammerplatte (1022) mit der Querträger-Verbindungsstange (10322) des zweiten Verbindungsrahmens (1032) verbunden ist; und
die Seitenkammer-Verbindungsstange (10311), die Bremsaufhängungsbügel-Verbindungsstange (10321) und die Querträger-Verbindungsstange (10322) jeweils an den entsprechenden Positionen mit der Verdrehsicherungsmontagestruktur verbunden sind.

14. Schienenfahrzeug, **dadurch gekennzeichnet, dass** es das Drehgestellrahmensystem nach einem der Ansprüche 1 bis 13 aufweist.

## Revendications

1. Système de châssis de bogie d'un véhicule ferroviaire, comprenant : un châssis de bogie (101) et une chambre de châssis de bogie (102) comprenant un ensemble de corps de chambre comprenant :
une plaque de chambre principale (1021) ; et
deux plaques de chambre latérales (1022), fixées aux deux côtés de la plaque de chambre principale (1021), et formant une cavité en retrait avec la plaque de chambre principale (1021) pour recevoir le châssis de bogie du véhicule ferroviaire ;
dans lequel un côté intérieur de la plaque de chambre principale (1021) est fixé à l'avant ou à l'arrière du châssis de bogie (101) pour séparer l'avant ou l'arrière du châssis de bogie (101) de l'extérieur et les côtés intérieurs des deux plaques de chambre latérales (1022) sont fixés aux côtés du châssis de bogie (101) pour séparer les côtés du châssis de bogie (101) de l'extérieur ;
**caractérisé en ce que**,
la chambre de châssis de bogie (102) comprend en outre : un premier cadre de liaison (1031) comprenant :
une tige de liaison de plaque de chambre latérale (10311), dans laquelle une extrémité de la tige de liaison de plaque de chambre latérale (10311) est reliée au côté intérieur de la plaque de chambre latérale (1022) par un joint en caoutchouc, et l'autre extrémité de la tige de liaison de plaque de chambre latérale (10311) est pourvue d'une interface de siège de fixation primaire (10311a) ; et
une tige de liaison de plaque de chambre principale (10312), dans laquelle une extrémité de la tige de liaison de plaque de chambre principale (10312) est reliée au côté intérieur de la plaque de chambre principale (1021) par un joint en caoutchouc, et l'autre extrémité de la tige de liaison de plaque de chambre principale (10312) est fixée à la tige de liaison de plaque de chambre latérale (10311) ;
dans lequel l'interface de siège de fixation primaire (10311a) de la tige de liaison de plaque de chambre latérale (10311) est destinée à se raccorder au siège de fixation de ressort primaire du châssis de bogie (101) ;
la tige de liaison de plaque de chambre latérale (10311) est plus haute que la tige de liaison de plaque de chambre principale (10312) ; et
le premier cadre de liaison (1031) comprend en outre une tige de renforcement de premier cadre de liaison (10313), dont une extrémité est fixée à la tige de liaison de plaque de chambre latérale (10311), et dont l'autre extrémité est fixée à la tige de liaison de plaque de chambre principale (10312), pour renforcer la résistance du premier cadre de liaison (1031).

2. Système de châssis de bogie selon la revendication 1, dans lequel, lorsque la plaque de chambre principale (1021) est fixée au châssis de bogie (101), la plaque de chambre principale (1021) recouvre les bords intérieurs de deux longerons du châssis de bogie (101) dans la direction de la largeur et les composants situés entre les deux longerons du châssis de bogie (101) dans la direction de la hauteur ;
dans le cas où la plaque de chambre latérale (1022) est fixée au châssis de bogie (101), la plaque de chambre latérale (1022) recouvre les longerons du châssis de bogie (101) et le côté du châssis de bogie (101) dans la direction de la largeur, recouvre vers le haut la surface supérieure des longerons du châssis de bogie (101) dans la direction de la hauteur, et recouvre vers le bas les composants montés sur les longerons du châssis de bogie (101) dans la direction de la hauteur ;
la plaque de chambre principale (1021) présente une surface extérieure profilée et les plaques de chambre latérales (1022) présentent une surface extérieure profilée ;
la surface extérieure de la plaque de chambre principale (1021) et la surface extérieure de la plaque de chambre latérale (1022) sont destinées à guider un flux d'air s'écoulant le long de la surface extérieure de la chambre de châssis de bogie (102) et à réduire le flux d'air pénétrant dans la chambre de châssis de bogie (102).

3. Système de châssis de bogie selon la revendication 2, dans lequel, lorsque la plaque de chambre latérale (1022) est fixée au châssis de bogie (101), la plaque de chambre latérale (1022) recouvre une unité de frein du châssis de bogie (101) du côté de la plaque de chambre latérale (1022) éloigné de la plaque de chambre principale (1021) lorsqu'elle est fixée au châssis de bogie (101) ;
la plaque de chambre latérale (1022) guide un flux d'air pénétrant par les extrémités supérieure et/ou inférieure de la plaque de chambre principale (1021) vers l'unité de frein du châssis de bogie (101) pour refroidir l'unité de frein ;
la chambre de châssis de bogie (102) comprend en outre une plaque insonorisante (1023) ; l'intérieur de la plaque de chambre principale (1021) est fixé à la plaque insonorisante, et/ou l'intérieur de la plaque de chambre latérale (1022) est fixé à la plaque insonorisante (1023).

4. Système de châssis de bogie selon l'une quelconque des revendications 1 à 3, comprenant en outre : un second cadre de liaison (1032) comprenant :
une tige de liaison de support de suspension de frein (10321), dans laquelle une extrémité de la tige de liaison de support de suspension de frein (10321) est reliée à la position du côté intérieur de la plaque de chambre latérale (1022) éloignée de la plaque de chambre principale (1021) par un joint en caoutchouc, et l'autre extrémité est pourvue d'une interface de support de suspension de frein (10321a) ;
dans lequel l'interface de support de suspension de frein (10321a) de la tige de liaison de support de suspension de frein (10321) est destinée à se raccorder au support de suspension d'unité de frein du châssis de bogie (101) ;
le second cadre de liaison (1032) comprend en outre :
une tige de liaison de traverse (10322), dans laquelle une extrémité de la tige de liaison de traverse (10322) est reliée à la position du côté intérieur de la plaque de chambre latérale (1022) éloignée de la plaque de chambre principale (1021) par un joint en caoutchouc, et l'autre extrémité est pourvue d'une interface de traverse (10322a) ; dans laquelle la tige de liaison de traverse (10322) est disposée en dessous de la tige de liaison de support de suspension de frein (10321) ;
dans lequel l'interface de traverse (10322a) de la tige de liaison de traverse (10322) est reliée à la traverse du châssis de bogie (101) ;
le second cadre de liaison (1032) comprend en outre :
une tige de renforcement de second cadre de liaison (10323), dans laquelle une extrémité de la tige de renforcement de second cadre de liaison (10323) est fixée à la tige de liaison de support de suspension de frein (10321), et l'autre extrémité est fixée à la tige de liaison de traverse (10322) ;
dans lequel les tiges de renforcement de second cadre de liaison (10323) sont au nombre de deux et disposées en parallèle.

5. Système de châssis de bogie selon la revendication 4, dans lequel l'ensemble de corps de chambre est au nombre de deux, les interfaces de traverse (10322a) des deux tiges de liaison de traverse (10322) sont reliées, et la liaison est destinée à se raccorder à la traverse du châssis de bogie (101).

6. Système de châssis de bogie selon l'une quelconque des revendications 1 à 5, dans lequel deux côtés de la plaque de chambre principale (1021) sont respectivement pourvus de trous traversants de plaque de chambre principale (10211) ;
le côté de la plaque de chambre latérale (1022) proche de la plaque de chambre principale (1021) présente un trou traversant étagé de plaque de chambre latérale (10221), et une section de plus grand diamètre du trou traversant de plaque de chambre latérale (10221) est éloignée de la plaque de chambre principale (1021) et une paroi de trou du trou traversant de plaque de chambre latérale (10221) est une structure polygonale anti-rotation ;
une extrémité d'une vis d'un premier boulon anti-rotation (1024) proche de la tête est formée avec une première plateforme anti-rotation (10241) en forme de prisme droit ; et
la vis du premier boulon anti-rotation (1024) passe à travers le trou traversant de plaque de chambre latérale (10221) et le trou traversant de plaque de chambre principale (10211), et la première plateforme anti-rotation (10241) est emboîtée dans une section de plus grand diamètre du trou traversant de plaque de chambre latérale (10221), et coopère avec un premier écrou (10251) pour fixer la plaque de chambre principale (1021) et la plaque de chambre latérale (1022).

7. Système de châssis de bogie selon la revendication 6, dans lequel la plaque de chambre principale (1021) comprend un siège de montage de plaque de chambre principale, et le siège de montage de plaque de chambre principale comprend :
un corps de siège de montage de plaque de chambre principale (10212), formé sur deux côtés de la plaque de chambre principale (1021) ;
un siège anti-rotation (1026), fixé au corps de siège de montage de plaque de chambre principale (10212) ; dans lequel le siège anti-rotation (1026) est pourvu de deux barres saillantes anti-rotation (10261) disposées en regard l'une de l'autre, le trou traversant de plaque de chambre principale (10211) est disposé entre les deux barres saillantes anti-rotation (10261) et traverse le corps de siège de montage de plaque de chambre principale (10212) et le siège anti-rotation (1026), et le milieu des barres saillantes anti-rotation (10261) est pourvu d'un évidement anti-rotation (10262) ; et
une première bande flexible anti-rotation (1027), dans laquelle la bande flexible anti-rotation (1027) est pourvue d'un trou traversant circulaire ;
dans lequel la vis du premier boulon anti-rotation (1024) passe en outre à travers le trou traversant circulaire de la première bande flexible anti-rotation (1027), les premiers écrous (10251) sont respectivement plaqués sur les deux côtés de la première bande flexible anti-rotation (1027), et les deux extrémités de la première bande flexible anti-rotation (1027) sont respectivement encliquetées dans l'évidement anti-rotation (10262).

8. Système de châssis de bogie selon la revendication 7, dans lequel le trou traversant de plaque de chambre principale (10211) présente une structure allongée.

9. Système de châssis de bogie selon la revendication 8, dans lequel une pluralité de sièges de montage de plaque de chambre principale sont disposés à intervalles de haut en bas sur deux côtés de la plaque de chambre principale (1021) ; et
le nombre de sièges anti-rotation (1026), de premières bandes flexibles anti-rotation (1027), et de trous traversants de plaque de chambre latérale (10221) est apparié avec le nombre de sièges de montage de plaque de chambre principale.

10. Système de châssis de bogie selon la revendication 9, comprenant en outre : une structure de montage anti-rotation comprenant :
un siège saillant anti-rotation (10222), formé sur le côté intérieur d'une plaque de chambre, dans lequel le siège saillant anti-rotation (10222) est pourvu d'un trou étagé, la paroi de trou d'une section de plus grand diamètre dans le trou étagé du siège saillant anti-rotation (10222) est une structure polygonale anti-rotation, et la plaque de chambre comprend une plaque de chambre principale (1021) et une plaque de chambre latérale (1022) ; et
un siège en creux anti-rotation (1033), pourvu d'un trou traversant, dans lequel le siège en creux anti-rotation (1033) est fixé sur le siège saillant anti-rotation (10222) ;
un second boulon anti-rotation (1034), dans lequel une seconde plateforme anti-rotation (10341) en forme de prisme droit est formée à une extrémité de la tige filetée du second boulon anti-rotation (1034) proche de la tête ;
dans lequel une vis du second boulon anti-rotation (1034) passe à travers le trou étagé du siège saillant anti-rotation (10222) et le trou traversant du siège en creux anti-rotation (1033), et la seconde plateforme anti-rotation (10341) est emboîtée dans une section de plus grand diamètre dans le trou étagé du siège saillant anti-rotation (10222), et coopère avec un second écrou (10351) pour fixer le siège saillant anti-rotation (10222) et la plaque de chambre.

11. Système de châssis de bogie selon la revendication 10, dans lequel deux rainures anti-rotation sont disposées symétriquement sur un côté du siège en creux anti-rotation (1033) éloigné du siège saillant anti-rotation (10222) ;
le second cadre de liaison (1032) comprend en outre : une seconde bande flexible anti-rotation (1036), dans laquelle la seconde bande flexible anti-rotation (1036) est pourvue d'un trou traversant circulaire ;
dans lequel une vis du second boulon anti-rotation (1034) passe en outre à travers le trou traversant circulaire de la seconde bande flexible anti-rotation (1036), les seconds écrous (10351) sont respectivement plaqués sur deux côtés de la seconde bande flexible anti-rotation (1036), et la seconde bande flexible anti-rotation (1036) est encliquetée dans les rainures anti-rotation.

12. Système de châssis de bogie selon la revendication 11, dans lequel le trou traversant du siège en creux anti-rotation (1033) est un trou traversant allongé.

13. Système de châssis de bogie selon la revendication 12, dans lequel la structure de montage anti-rotation est prévue aux positions où la plaque de chambre latérale (1022) est reliée à la tige de liaison de plaque de chambre latérale (10311) du premier cadre de liaison (1031), où la plaque de chambre latérale (1022) est reliée à la tige de liaison de support de suspension de frein (10321) du second cadre de liaison (1032), et où la plaque de chambre latérale (1022) est reliée à la tige de liaison de traverse (10322) du second cadre de liaison (1032) ; et
la tige de liaison de plaque de chambre latérale (10311), la tige de liaison de support de suspension de frein (10321), et la tige de liaison de traverse (10322) sont respectivement reliées à la structure de montage anti-rotation aux positions respectives.

14. Véhicule ferroviaire, **caractérisé en ce qu'**il comprend le système de châssis de bogie selon l'une quelconque des revendications 1 à 13.
